# EUROPEAN PATENT SPECIFICATION

(11) **EP 3 461 075 B1**
(45) Date of publication and mention of the grant of the patent: **16.09.2020**
(21) Application number: 16904621.6
(22) Date of filing: 08.06.2016
(51) Int. Cl.: H04L 12/66, H04L 29/06, H04W 4/70

(54) **GATEWAY APPARATUS AND TRANSFER METHOD**
GATEWAY-VORRICHTUNG UND ÜBERTRAGUNGSVERFAHREN
APPAREIL PASSERELLE, ET PROCÉDÉ DE TRANSFERT

(43) Date of publication of application: 27.03.2019
(73) Proprietor: Mitsubishi Electric Corporation, Chiyoda-ku Tokyo 100-8310 (JP)
(72) Inventor: OGA, Masao, Tokyo 100-8310 (JP)
(74) Representative: Pfenning, Meinig & Partner mbB
(86) International application number: PCT/JP2016/067106
(87) International publication number: WO 2017/212586

(56) References cited:
- EP-A2- 2 428 910
- JP-A- 2005 038 027
- JP-A- 2012 164 369
- JP-A- 2013 003 816
- JP-A- 2013 084 164
- JP-A- 2015 028 742
- US-A1- 2014 140 254
- US-A1- 2014 140 254
- US-B1- 8 220 038
- DAN YAMAMOTO ET AL: "A Study on High- Performance Presence Monitoring System", IEICE TECHNICAL REPORT TM2007-65,, vol. 107, no. 545, 6 March 2008 (2008-03-06), pages 73-78, XP009510265,
- DAN YAMAMOTO et al.: "A Study on High- Performance Presence Monitoring System", IEICE Technical Report TM2007-65, vol. 107, no. 545, 6 March 2008 (2008-03-06), pages 73-78, XP009510265,
- MASAYUKI ITO et al.: "Home ICT no Shinso HGW o Kiten ni Home-Net o Riyo Kateinai no Kiki o Jido Hakken-Seigyo, Apuri no Haifu-Koshin mo Kano", Nikkei Communications, vol. 551, 1 February 2010 (2010-02-01), pages 36-43, XP009510833,

## Description

### Field

The present invention relates to a gateway device and a transfer method for collecting information from a plurality of devices that perform communication using different communication systems.

### Background

As an enormous number of various devices such as devices with sensors, cameras, vehicles, and household appliances are connected to the Internet in recent years, people have expectations for an Internet of Things (IoT) technology that collects information from the devices and creates new value. One example of the IoT technology is a sensor monitoring system that uses sensors to monitor infrastructure such as roads, tunnels, and bridges. The proportion of the infrastructure such as the roads, tunnels, and bridges constructed 50 or more years ago is expected to increase rapidly in the next 20 years. Installing devices with sensors at the infrastructure facilities such as the roads, tunnels, and bridges and collecting information from the devices are thought to allow for efficient operation and management of the facilities and efficient updates of a deteriorating facility on the basis of the information collected.

On the other hand, the devices with sensors use various wireless systems. For example, the devices can use a system based on the Institute of Electrical and Electronic Engineers (IEEE) 802.15.4 standard such as Zigbee (registered trademark) or Wireless Smart Utility Network (Wi-SUN) (registered trademark) which is a short-range wireless communication standard for a smart meter or the like, and also a new wireless system such as Narrowband IoT standardized by Rel. 13 of the 3rd Generation Partnership Project (3GPP) and IEEE 802.11ah which is one of the Wi-Fi (registered trademark) standards. Moreover, the sensors include various kinds of sensors such as a thermometer, an accelerometer, and a watt-hour meter.

The sensor monitoring system utilizing the IoT is therefore required to be compatible with various sensors and wireless systems, or to be able to process information acquired by various kinds of sensors and at the same time perform reception processing corresponding to various wireless systems.

As a technique for supporting various sensors and wireless systems, Patent Literature 1 discloses a technique for facilitating addition of a new kind of sensor and introduction of a new communication standard by converting the format of data collected from sensor nodes into the format that is easy to handle before a server as a host device performs processing.

Patent Literature 2 describes a method and program product for securely routing communicating data between sources and destinations having various data protocols. Data protocols are converted to internet protocol, if not already in internet protocol, for routing. Cryptographic keys of the source, the message, and the destination are verified. If a source and a destination share the same control system, the communication need not, but may, be encrypted for routing; otherwise, the communication is encrypted for routing on the local area network and then decrypted before transmission to the destination. Some communications require further security processing, such as in a HAIPE for certain SATCOM communications.

Patent Literature 3 describes a multi-level security data processing architecture which includes various components configured to provide full data separation across multiple processors while limiting the number and size of high assurance components. The architecture includes a domain separator for ensuring that messages exchanged between domains that are distributed on different microprocessors are securely routed between domain members. The domain separator verifies a message label including a domain identifier provided by a domain gateway and cryptographically binds the message label to each message via cryptographic keys.

Non-Patent Literature 1 describes a method for transforming a Session Initiation Protocol (SIP) message to a Simple Object Access Protocol (SOAP) message.

Patent Literature 4 describes a method for distributing a single stream of sensor data to one or more services. The method may include maintaining an association between sensor data and one or more services requesting the sensor data.

### Citation List

### Patent Literature

Patent Literature 1: JP 4719034 B2
Patent Literature 2: US 8 220 038 B1
Patent Literature 3: EP 2 428 910 A2
Patent Literature 4: US 2014/140254 A1

### Non-Patent Literature

Non-Patent Literature 1 : DAN YAMAMOTO ET AL, "A Study on High- Performance Presence Monitoring System", IEICE TECHNICAL REPORT TM2007-65,, (20080306), vol. 107, no. 545, pages 73 - 78, XP009510265

### Summary

### Technical Problem

Installing a huge number of devices requires a great deal of labor so that installing a device for each different business leads to an increase in cost and maintenance. Thus, in the sensor monitoring system utilizing IoT, sharing information of a device, that is, the information acquired by the device, becomes an issue. Although the information of the device can be shared among servers of businesses, the information transmission among the servers lacks immediacy and is thus difficult to apply to an application requiring low latency. On the other hand, ensuring security in IoT is also an important issue. Sharing individual information of a device or the like in a network where security is not ensured may encourage a malicious attack on the device.

The technique described in Patent Literature 1 above can collect information of a device without the server performing processing corresponding to the wireless system and the kind of the sensor when there is only one server. Patent Literature 1 however does not describe a method of sharing the information of the device among a plurality of servers of different businesses. The paths between a gateway device and the plurality of servers managed by the different businesses may have different levels of security so that, in terms of ensuring security, there may be a problem with the gateway device simply transferring information therefrom to the plurality of servers.

The present invention has been made in view of the above, and an object of the present invention is to obtain a gateway device that allows a plurality of servers to share device information while ensuring security.

### Solution to Problem

The above problems are solved by the subject-matter according to the independent claims.

### Advantageous Effects of Invention

The gateway device according to the present invention has an effect of allowing the plurality of servers to share the device information while ensuring security.

### Brief Description of Drawings

FIG. 1 is a diagram illustrating an example of the configuration of a sensor monitoring system according to a first embodiment.
FIG. 2 is a diagram illustrating an example of the configuration of a gateway device according to the first embodiment.
FIG. 3 is a table illustrating an example of the format of a server according to the first embodiment.
FIG. 4 is a table illustrating an example of format information representing the definition of the format of the server illustrated in FIG. 3.
FIG. 5 is a table illustrating an example of the format of the server according to the first embodiment.
FIG. 6 is a table illustrating an example of format information representing the definition of the format of the server illustrated in FIG. 5.
FIG. 7 is a diagram illustrating an example of the configuration of a management device and the server according to the first embodiment.
FIG. 8 is a diagram illustrating an example of the configuration of a control circuit according to the first embodiment.
FIG. 9 is a sequence diagram illustrating an example of a startup procedure of the gateway device according to the first embodiment.
FIG. 10 is a table illustrating an example of a data processing policy according to the first embodiment.
FIG. 11 is a flowchart illustrating an example of a sensor information transfer procedure of the gateway device according to the first embodiment.
FIG. 12 is a sequence diagram illustrating an example of data processing of the gateway device when security is applied according to the first embodiment.
FIG. 13 is a sequence diagram illustrating an example of data processing of the gateway device when security is not set according to the first embodiment.
FIG. 14 is a table illustrating an example of sensor information A according to the first embodiment.
FIG. 15 is a table illustrating an example of sensor information C according to the first embodiment.
FIG. 16 is a sequence diagram illustrating another example of data processing of the gateway device when security is not set according to the first embodiment.
FIG. 17 is a table illustrating an example of the format of the server according to the first embodiment.
FIG. 18 is a table illustrating the definition of the format illustrated in FIG. 17 according to the first embodiment.
FIG. 19 is a table illustrating an example of the format of the server according to the first embodiment.
FIG. 20 is a table illustrating the definition of the format illustrated in FIG. 19.
FIG. 21 is a table illustrating an example of the data processing policy assuming the formats illustrated in FIGS. 17, 18, 19, and 20.
FIG. 22 is a table illustrating the device format of a device according to the first embodiment.
FIG. 23 is a table illustrating the format of the sensor information according to the first embodiment.
FIG. 24 is a diagram illustrating an example of the configuration of a sensor monitoring system according to a second embodiment.
FIG. 25 is a diagram illustrating an example of the configuration of a gateway device according to the second embodiment.
FIG. 26 is a table illustrating an example of a data processing policy according to the second embodiment.

### Description of Embodiments

A gateway device and a transfer method according to an embodiment of the present invention will now be described in detail with reference to the drawings. Note that the present invention is not limited to the embodiment.

### First Embodiment.

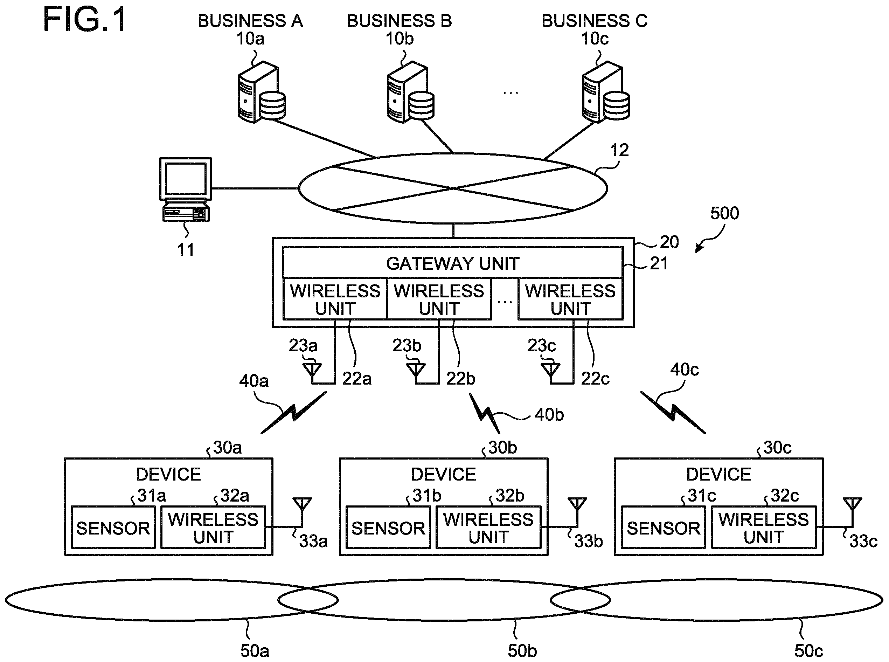

FIG. 1 is a diagram illustrating an example of the configuration of a sensor monitoring system according to a first embodiment of the present invention. As illustrated in FIG. 1, a sensor monitoring system 500 of the first embodiment which is a monitoring system according to the present invention includes servers 10a, 10b, and 10c, a gateway device 20, a management device 11, and devices 30a, 30b, and 30c. The servers 10a, 10b, and 10c are servers of businesses A, B, and C, respectively. That is, the servers 10a, 10b, and 10c are the servers installed and operated by the businesses A, B, and C, respectively. In other words, the servers 10a, 10b, and 10c being a plurality of servers include servers installed by different businesses. Note that although FIG. 1 illustrates three of the plurality of servers, any number of servers may be installed.

The gateway device 20 is connected to an Internet network 12 and can communicate with each of the servers 10a, 10b, and 10c and the management device 11 via the Internet network 12 using an Internet Protocol (IP). The present embodiment will describe an example of using the IP as a communication protocol for the communication between the gateway device 20 and each of the servers 10a, 10b, and 10c and the management device 11, but the communication protocol used for the communication between the gateway device 20 and each of the servers 10a, 10b, and 10c and the management device 11 is not limited to the IP. The gateway device 20 can also perform wireless communication with each of the devices 30a, 30b, and 30c.

The devices 30a, 30b, and 30c can perform communication using different wireless systems. The devices 30a, 30b, and 30c are devices installed by the businesses A, B, and C, respectively. That is, the devices 30a, 30b, and 30c being a plurality of devices include devices installed by different businesses. The device 30a includes a sensor 31a, a wireless unit 32a, and an antenna 33a, the device 30b includes a sensor 31b, a wireless unit 32b, and an antenna 33b, and the device 30c includes a sensor 31c, a wireless unit 32c, and an antenna 33c. The communication system used by the device 30a is also referred to as a first communication system, the communication system used by the device 30b is also referred to as a second communication system, and the communication system used by the device 30c is also referred to as a third communication system. The present embodiment uses an acceleration sensor and a gyro sensor (an angular velocity sensor) as examples of the sensors 31a, 31b, and 31c, but the type of the sensor is not limited to the acceleration sensor and gyro sensor. Note that although FIG. 1 illustrates the antennas outside of the corresponding blocks in order to emphasize propagation of a wireless signal from the antennas, each antenna may be mounted on the device on which the wireless unit connected to the antenna is mounted.

The sensor monitoring system 500 supports the wireless systems used by the devices 30a, 30b, and 30c. That is, the gateway device 20 of the sensor monitoring system 500 can perform communication using the first communication system, the second communication system, and the third communication system which are a plurality of wireless communication systems. The wireless systems supported by the sensor monitoring system 500 can be added or deleted. The communication standards such as Wi-SUN, Zigbee, and Narrowband IoT defined by the 3GPP correspond to the wireless systems used by the devices 30a, 30b, and 30c, or the wireless systems supported by the sensor monitoring system 500. However, the wireless systems supported by the sensor monitoring system 500 of the present embodiment are not limited thereto. Moreover, although an example in which one device supports one wireless system is described herein, one device may support a plurality of wireless systems, or a plurality of devices may support a single wireless system.

The management device 11 monitors the setting and operating state of the gateway device 20 and, when the sensor monitoring system 500 supports a new wireless system, downloads a program for supporting the new wireless system.

FIG. 1 illustrates an example of the configuration in which the management device 11 is connected to one gateway device 20, but two or more of the gateway devices 20 may be connected to the management device 11. Moreover, on the basis of security evaluation policies of the businesses, a protocol such as Internet Protocol Security (IPsec) may be applied between one or more of the servers 10a, 10b, and 10c and the gateway device 20 in order to enhance the security of the communication path between the servers 10a, 10b, and 10c and the gateway device 20. Furthermore, although FIG. 1 illustrates the Internet network 12 as one network, one or more of the servers 10a, 10b, and 10c may be connected to the gateway device 20 via a closed communication network formed by the business(es).

The gateway device 20 includes a gateway unit 21 that implements a function as a gateway including sensor information sharing processing, wireless units 22a, 22b, and 22c, and antennas 23a, 23b, and 23c. Although described later in detail, the sensor information sharing processing is the processing of converting sensor information into a format that can be processed by each server and performing transfer in accordance with the security evaluation policy of each server. The wireless unit 22a and the antenna 23a are a wireless unit and an antenna compatible with the first communication system, the wireless unit 22b and the antenna 23b are a wireless unit and an antenna compatible with the second communication system, and the wireless unit 22c and the antenna 23c are a wireless unit and an antenna compatible with the third communication system. That is, the gateway device 20 can wirelessly communicate with the device 30a via the wireless unit 22a and the antenna 23a, wirelessly communicate with the device 30b via the wireless unit 22b and the antenna 23b, and wirelessly communicate with the device 30c via the wireless unit 22c and the antenna 23c.

Service areas 50a, 50b, and 50c illustrated in FIG. 1 indicate ranges in which the devices can communicate with the wireless units 22a, 22b, and 22c of the gateway device 20, respectively. That is, the service area 50a is a range in which the wireless unit 22a of the gateway device 20 and the wireless unit 32a of the device 30a can communicate with each other via the antenna 23a and the antenna 33a through a wireless channel 40a. The wireless channel 40a indicates a wireless channel based on the first communication system. Likewise, the service area 50b is a range in which the wireless unit 22b of the gateway device 20 and the wireless unit 32b of the device 30b can communicate with each other via the antenna 23b and the antenna 33b through a wireless channel 40b. The wireless channel 40b indicates a wireless channel based on the second communication system. Likewise, the service area 50c is a range in which the wireless unit 22c of the gateway device 20 and the wireless unit 32c of the device 30c can communicate with each other via the antenna 23c and the antenna 33c through a wireless channel 40c. The wireless channel 40c indicates a wireless channel based on the third communication system.

The wireless units 22a, 22b, and 22c are first communication units that receive first device information being a piece of information transmitted from the devices.

In the following description, the servers 10a, 10b, and 10c will be referred to as a server 10 as appropriate when no distinction is made thereamong. Likewise, the devices 30a, 30b, and 30c will be referred to as a device 30 as appropriate when no distinction is made thereamong, and the wireless channels 40a, 40b, and 40c will be referred to as a wireless channel 40 as appropriate when no distinction is made thereamong. The sensors 31a, 31b, and 31c will be referred to as a sensor 31 as appropriate when no distinction is made thereamong, and the wireless units 32a, 32b, and 32c will be referred to as a wireless unit 32 as appropriate when no distinction is made thereamong. The wireless units 22a, 22b, and 22c will be referred to as a wireless unit 22 as appropriate when no distinction is made thereamong. The antennas 23a, 23b, and 23c will be referred to as an antenna 23 as appropriate when no distinction is made thereamong. The service areas 50a, 50b, and 50c will be referred to as a service area 50 when no distinction is made thereamong. Although FIG. 1 illustrates three of the devices 30, the number of devices is not limited thereto but may be one or more.

In the sensor monitoring system 500 of the present embodiment, the server 10 collects sensor information as the first device information from the device 30 through wireless communication via the Internet network 12, the gateway device 20, and the wireless channel 40. The sensor information includes information indicating a result detected by the sensor 31 of the device 30, or information acquired by the sensor 31. Note that in the following example, a device equipped with a sensor is described as the device transmitting the information collected by the server 10. However, the device is not limited to the device equipped with a sensor but may be a household appliance, a camera, or the like with a wireless communication function. That is, the information collected by the server 10 may be device information transmitted from the device, and the sensor information is an example of device information.

As illustrated in FIG. 1, the gateway device 20 transmits and receives radio waves using the wireless channel 40 corresponding to each wireless system, and the service area 50 is configured by the radio waves. On the gateway device 20, the gateway unit 21 controls each wireless unit 22. Each service area 50 can also be referred to as a range capable of receiving the radio waves emitted from the antenna 23 connected to the wireless unit 22 of the gateway device 20. Each service area 50 can flexibly change the point where the radio waves are actually transmitted and received by the gateway device 20 by extending the antenna 23. The service areas 50 may thus overlap or may be configured individually without overlapping. Note that the plurality of wireless systems supported by the sensor monitoring system 500 may be wireless systems with a plurality thereof using the same frequency, or may be wireless systems each using a different frequency. Each wireless system uses a different frequency in the following example describing the sensor monitoring system 500 of the present embodiment below, but the frequency used by the wireless system is not limited thereto.

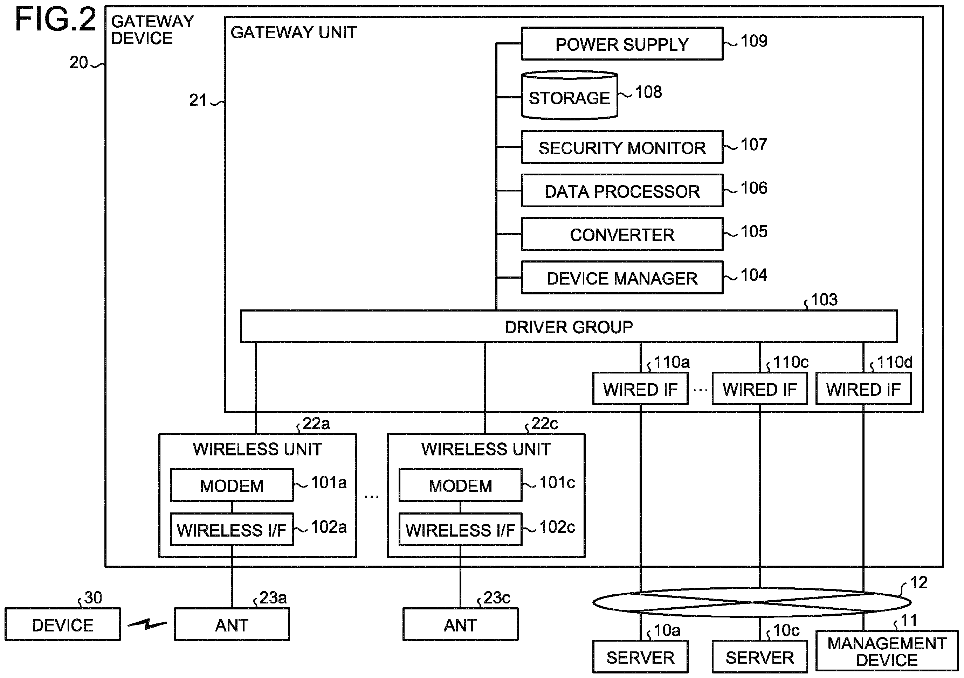

FIG. 2 is a diagram illustrating an example of the configuration of the gateway device 20 according to the embodiment. FIG. 2 includes illustration of the device 30, the server 10a, the server 10c, the management device 11, and the Internet network 12. As illustrated in FIG. 2, the gateway unit 21 of the gateway device 20 includes a driver group 103, a device manager 104, a converter 105, a data processor 106, a security monitor 107, a storage 108, a power supply 109, and wired interfaces (I/F) 110a, 110c, and 110d.

The wired I/F 110a communicates with the server 10a via the Internet network 12. A wired I/F 110b communicates with the server 10b via the Internet network 12. The wired I/F 110c communicates with the server 10c via the Internet network 12. The wired I/F 110d communicates with the management device 11 via the Internet network 12. FIG. 2 omits illustration of the wired I/F 110b and the server 10b. Although FIG. 2 illustrates an example in which the gateway device 20 includes the wired I/F 110 for each of the servers 10 and the management device 11, two or more of the wired I/Fs 110 may be implemented by one wired I/F 110. The wired I/Fs 110a, 110b, 110c, and 110d will be referred to as the wired I/F 110 as appropriate when no distinction is made thereamong.

The wireless unit 22a of the gateway device 20 includes a modem 101a and a wireless I/F 102a. Likewise, the wireless unit 22b of the gateway device 20 includes a modem 101b and a wireless I/F 102b, and the wireless unit 22c includes a modem 101c and a wireless I/F 102c. FIG. 2 omits illustration of the wireless unit 22b. Note that in FIG. 2, the antennas are each abbreviated as an ANT. The modems 101a, 101b, and 101c will be referred to as a modem 101 as appropriate when no distinction is made thereamong, and the wireless I/Fs 102a, 102b, and 102c will be referred to as a wireless I/F 102 as appropriate when no distinction is made thereamong.

The wired I/F 110a performs transmission/reception processing based on the IP with the server 10a via the Internet network 12. Although one wired I/F 110 is provided for each of the servers and the management device, the wired I/F can be shared.

The antenna 23 transmits a wireless signal to the corresponding wireless channel 40 and receives a wireless signal from the corresponding device 30 via the wireless channel 40. Upon receiving a signal to be transmitted to the wireless channel 40 from the gateway unit 21, the wireless unit 22 transmits the received signal as the wireless signal via the antenna 23, and outputs the wireless signal received by the antenna 23 to the gateway unit 21. Although FIGS. 1 and 2 illustrate the example in which the antenna 23 is included for each wireless unit 22, a plurality of the wireless units 22 may share one antenna 23 or a plurality of the antennas 23.

The modem 101 of the wireless unit 22 performs processing for establishing wireless connection with the device 30, specifically, modulation processing, demodulation processing, and the like. The modem 101 performs the processing for establishing wireless connection on a signal received from the gateway unit 21, and outputs the processed signal to the wireless I/F 102. The modem 101 also performs the processing for establishing wireless connection on a signal received from the wireless I/F 102, and outputs the processed signal to the gateway unit 21. The wireless I/F 102 performs reception processing on a signal received via the antenna 23 in accordance with the communication standard of the corresponding wireless system, and outputs the processed signal to the modem 101. The wireless I/F 102 also performs transmission processing on a signal received from the modem 101 in accordance with the communication standard of the corresponding wireless system, and transmits the processed signal via the antenna 23. The wireless I/F transmits and receives a wireless signal to and from the device 30 via the antenna 23. The wireless I/F 102 outputs the signal received via the antenna 23 to the modem 101, and outputs the signal received from the modem 101 to the driver group 103.

In the case where the wireless unit 22 is configured by software running on Software Defined Radio (SDR) or Virtual Machine (VM), addition of a new wireless unit 22 or new wired I/Fs 110a to 110d is implemented by installing a program received from the management device 11 via the wired I/F 110d. At this time, an execution module corresponding to the new wireless unit 22 or wired I/Fs 110a to 110d is added to the driver group 103 as appropriate.

The driver group 103 controls the operations of the wireless unit 22 and the wired I/Fs 110a to 110d. The driver group 103 is a program running on an Operation System (OS) installed in the gateway device 20, and performs control corresponding to the interface of each hardware in response to a request from software executed on the gateway device 20. The present embodiment establishes communication between each unit configured by software including the data processor 106 and the device 30, the server 10, and the management device 11 by controlling the hardware operation of each of the wireless unit 22 and the wired I/Fs 110a to 110d via the driver group 103.

The device manager 104 monitors the device status of the gateway device 20. Specifically, the device manager 104 monitors one or more of a hardware status, a wired connection status, a wireless communication status, and a power supply status of the gateway device 20, for example. The hardware status indicates whether the gateway device 20 is faulty or normal. In the determination of whether the gateway device 20 is faulty or not, for example, one or more of the components included in the gateway device 20 detect a fault in any of the components and output an alarm signal, so that the device manager 104 determines the gateway device is faulty when detecting the alarm signal. The device manager 104 detects a fault in the gateway device 20 using not only the above method but any method by which a fault in the gateway device 20 can be detected. The wired connection status indicates whether or not a communication path or a path is established with the server 10 and the management device 11 via the wired I/F 110. A typical method determines that the wired connection status is abnormal upon detection of a link disconnection in the link status of Ethernet (registered trademark) to which each wired I/F 110 is connected. The wireless communication status indicates whether or not the gateway device 20 is in communication with the device 30 in the service area 50. The device manager 104 transmits information indicating the device status to the management device 11 via the driver group 103 and the wired I/F 110d on a regular basis or when the device status changes.

The converter 105 converts sensor information received from the device 30 via the antenna 23 and the wireless unit 22 into a format that can be processed by the server 10. Although all items of the sensor information are converted into the format that can be processed by the server 10 in the following description, some items of some of the sensor information may be converted into the format that can be processed by the server 10. That is, the converter 105 converts at least a part of the sensor information which is the first device information into second device information which is a piece of information in the format determined depending on the server 10 to which the information is transferred. The format that can be processed by the server 10 will also be hereinafter referred to as the format of the server 10. Format information representing the definition of the format that can be processed by each server 10 is stored in the storage 108. The converter 105 converts the sensor information on the basis of the format information.

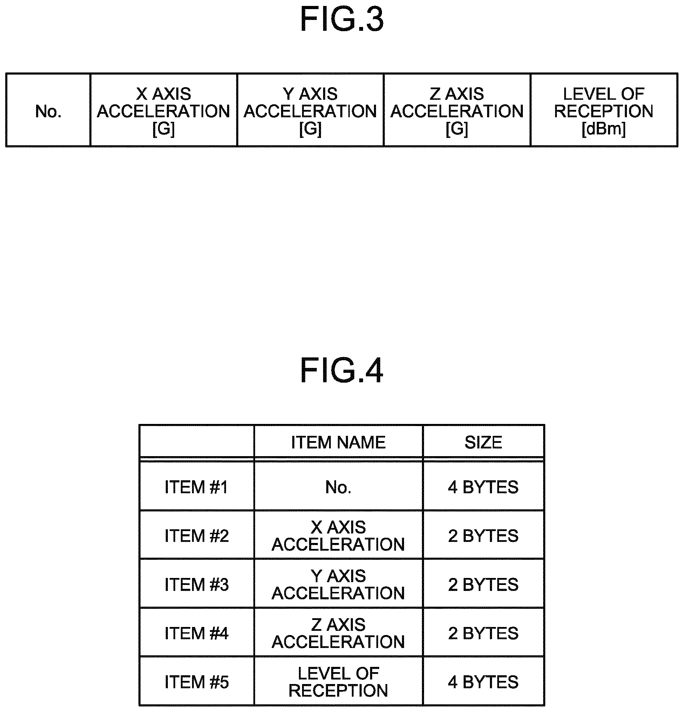

FIG. 3 is a table illustrating an example of the format of the server 10a. FIG. 4 is a table illustrating an example of the format information representing the definition of the format of the server 10a illustrated in FIG. 3. The server 10a is a server installed by the business A and is thus configured to be able to process sensor information transmitted from the device 30a installed by the business A. In the present embodiment, the sensor 31a of the device 30a is assumed to be a triaxial accelerometer and measures acceleration in each of X axis, Y axis, and Z axis directions. The device 30a measures the level of reception of a wireless signal transmitted through the wireless channel 40a. The device 30a transmits the acceleration in each of the X axis, Y axis, and Z axis directions and the level of reception as the sensor information in the format illustrated in FIG. 3. The format of the server 10a is the same as the format of the sensor information transmitted from the device 30a, and is the format illustrated in FIG. 3.

As illustrated in FIG. 3, the format of the server 10a includes "No.", X axis acceleration [G], Y axis acceleration [G], Z axis acceleration [G], and the level of reception [dBm]. The "No." is a number associated with each sensor information and is determined by the device 30a, for example. The X axis, Y axis, and Z axis are also called "pitch axis", "roll axis", and "yaw axis". As illustrated in FIG. 4, the format illustrated in FIG. 3 is defined by items from item #1 to item #5, where each item defines information indicating the name of the item, that is, the content of the item, and the size, that is, the data size of the item. Item #1 is an item indicating data stored at the head of the sensor information, and item #2 is an item indicating data stored next to item #1. The item numbers thus indicate the order of arrangement of the data in the format. The format of the server 10a and the format information in FIGS. 3 and 4 are illustrated as an example and are not limited thereto.

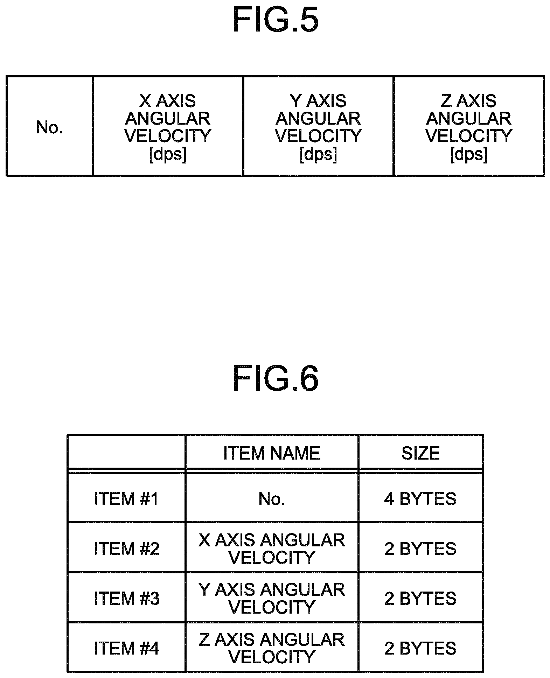

FIG. 5 is a table illustrating an example of the format of the server 10c. FIG. 6 is a table illustrating an example of format information representing the definition of the format of the server 10c illustrated in FIG. 5. The server 10c is a server installed by the business C and is thus configured to be able to process sensor information transmitted from the device 30c installed by the business C. In the present embodiment, the sensor 31c of the device 30c is assumed to be a gyro sensor and measures angular velocity in each of the X axis, Y axis, and Z axis directions, or angular velocity about each axis. The device 30c transmits the angular velocity in each of the X axis, Y axis, and Z axis directions as the sensor information in the format illustrated in FIG. 5. The format of the server 10c is the same as the format of the sensor information transmitted from the device 30c, and is the format illustrated in FIG. 5.

As illustrated in FIG. 5, the format of the server 10c includes "No.", X axis angular velocity [degree per second (dps)], Y axis angular velocity [dps], and Z axis angular velocity [dps]. The "No." is a number associated with each sensor information. As illustrated in FIG. 6, the format illustrated in FIG. 5 is defined by items from item #1 to item #4, where each item defines the name of the item and the size. As with the example in FIGS. 3 and 4, the item numbers illustrated in FIG. 6 indicate the order of arrangement of the data in the format. The format of the server 10c and the format information in FIGS. 5 and 6 are illustrated as an example and are not limited thereto.

Returning back to the description of FIG. 2, the data processor 106 determines whether or not the sensor information received via the antenna 23, the wireless unit 22, and the driver group 103 can be transferred on the basis of the data processing policy for each server 10 to which the information is transferred, and at the same time determines whether or not the format of the sensor information needs to be converted. That is, the data processor 106 is a determination unit that determines, for each server 10, whether or not the second device information being the sensor information after subjected to the format conversion can be transferred to the server on the basis of the security setting of the communication path to the server 10.

Although the present embodiment describes an example in which the gateway device 20 converts the format of single sensor information, similar processing is performed to be able to convert the format by combining a plurality of sensor information received from a plurality of devices using the same wireless system or a plurality of sensor information collected from a plurality of devices using different wireless systems and transfer the information to the server 10. In this case, the format after combining the information is defined in the format information of the server 10 described above. For example, when the server 10a collects information combining both the sensor information transmitted from the device 30a and the sensor information transmitted from the device 30c, the information transmitted to the server 10a has the format in which the format illustrated in FIG. 5 is added after the format illustrated in FIG. 3. In this case, "No." in the format illustrated in FIG. 3 and "No." in the format illustrated in FIG. 5 may be left as is or may be deleted and replaced with a new number by the converter 105 so that "No." indicating the new number may be included in the format.

The security monitor 107 monitors the security setting status between the gateway device 20 and the server 10 and between the gateway device 20 and the management device 11. That is, the security monitor 107 monitors the security setting status of the communication path between the gateway device and each of the plurality of servers. The present embodiment describes an example of monitoring the status of establishment of IPsec as the security setting status. The protocol for ensuring security is not limited to the IPsec, and thus another security protocol can be used. Alternatively, the gateway device 20 may be configured to be able to perform processing using a plurality of security algorithms so that the security monitor 107 monitors the type of the security algorithm applied for each device.

The storage 108 stores internal information necessary for the operation of the gateway device 20. The internal information necessary for the operation of the gateway device 20 includes operation information received from the management device 11 in a startup procedure described later. The power supply 109 has a function of supplying power from an external power supply including a system power supply to each unit in the gateway device 20, and can also supply power using power from a power generator such as a solar power generator in the event of a power failure of the external power supply.

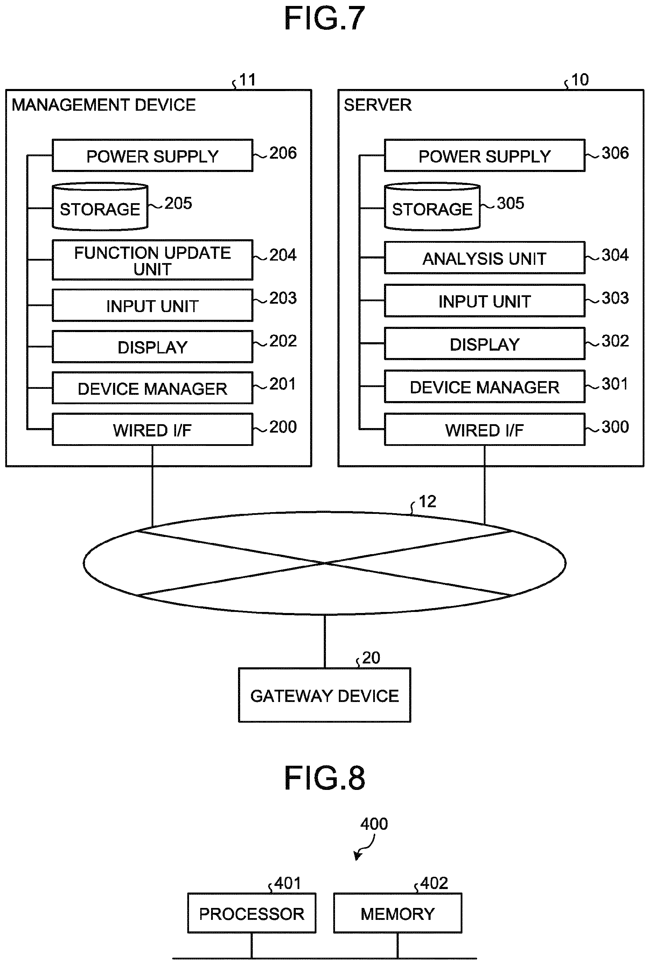

FIG. 7 is a diagram illustrating an example of the configuration of the management device 11 and the server 10 according to the present embodiment. The management device 11 includes a wired I/F 200, a device manager 201, a display 202, an input unit 203, a function update unit 204, a storage 205, and a power supply 206. The wired I/F 200 performs transmission/reception processing for connecting to the gateway device 20 via the Internet network 12. The wired I/F 200 receives information indicating the device status from the gateway device 20 and stores the information in the storage 205.

The device manager 201 performs control to cause the display 202 to display the information indicating the device status of the gateway device 20 stored in the storage 205. The device manager 201 also manages operation information used to control the gateway device 20. Specifically, the device manager 201 reads the operation information which specifies the operation of each unit of the gateway device 20 from the storage 205, and notifies the device manager 104 in the gateway device 20 of the operation information via the wired I/F 200. The device manager 201 also registers, updates, and deletes the data processing policy used by the gateway device 20. The data processing policy is information indicating the definition of processing to be performed when the gateway device 20 receives the sensor information. The data processing policy includes an identification number of a device format, a transfer destination list, and the security evaluation policy for each reception path, or the wireless unit 22. The device format is the format of the sensor information transmitted from the device 30. The transfer destination list includes, for each transfer destination, information indicating a processing program to be executed when the sensor information is transferred. Details of the data processing policy will be described later.

The display 202 displays the device status of the gateway device 20 managed by the device manager 201. The input unit 203 receives an input from an operator for setting the gateway device 20. When a new wireless unit 22 is added to the gateway device 20, the function update unit 204 transmits, to the gateway device 20, the processing program defined by the data processing policy corresponding to the new wireless unit 22 in response to a request from the gateway device 20. The processing program defined by the data processing policy is a processing program used to convert the format of the sensor information received from the device 30 into the format for transmission to the server 10, where the information indicating the processing program is included in a format conversion policy within the data processing policy.

In the case where the wireless unit 22 is configured by software running on Software Defined Radio (SDR) or Virtual Machine (VM), the function update unit 204 may download software for implementing the wireless unit 22 from the Internet network 12 and transmit the software to the gateway device 20 when a new wireless unit 22 is to be added to the gateway device 20.

The processing program defined in the data processing policy may be a program of any format such as a plug-in program using Java (registered trademark) programming. The storage 205 stores internal information necessary for the operation of the management device 11 as well as device status information indicating the device status of the gateway device 20 and the operation information thereof that are managed by the device manager 201. The internal information necessary for the operation of the management device 11 and the operation information of the gateway device 20 are determined in advance, newly registered, or updated, for example, and are stored in the storage 205. The internal information necessary for the operation of the management device 11 and the operation information of the gateway device 20 may be changed on the basis of an external input through the input unit 203. The power supply 206 supplies power from an external power supply or the like to each unit of the management device 11.

The server 10 is a device implemented by a general-purpose computer such as a personal computer. The server 10 includes a wired I/F 300, a device manager 301, a display 302, an input unit 303, an analysis unit 304, a storage 305, and a power supply 306. The wired I/F 300 performs transmission/reception processing based on the IP with the gateway device 20 via the Internet network 12. The device manager 301 and the analysis unit 304 are implemented by a processor of the computer reading and executing a program stored in a memory of the computer.

The device manager 301 manages the device status including a software status on the server 10. The software status on the server 10 indicates the type of software usable on the server 10. The device status is similar to the device status of the gateway device 20. The display 302 can display the device status related to the server 10 managed by the device manager 301 and the sensor information collected via the gateway device 20 and the Internet network 12. The input unit 303 receives an input from an operator for operating the sensor information collected and setting the server 10. The analysis unit 304 analyzes the sensor information received from the gateway device 20 via the wired I/F 300, and stores the sensor information and a result of the analysis in the storage 305. The power supply 306 supplies power from an external power supply or the like to each unit of the server 10.

Next, the hardware configuration of the gateway device 20 will be described. Each component of the gateway device 20 illustrated in FIG. 2 can be implemented as hardware such as an electronic circuit. The antenna 23 includes an antenna and a processing circuit which is an electronic circuit including a frequency converter circuit, an amplifier, and an analog-to-digital converter. The modem 101 includes a modem, and the wireless I/F 102 and the wired I/F 110 each include a communication interface circuit. The storage 108 is a memory. The power supply 109 is a power supply circuit that supplies power.

The device manager 104, the converter 105, the data processor 106, and the security monitor 107 are implemented by a processing circuit which is an electronic circuit performing each processing. The processing circuit may be dedicated hardware or a control circuit including a memory and a central processing unit (also referred to as a CPU, a central processor, a processing unit, an arithmetic unit, a microprocessor, a microcomputer, a processor, or a digital signal processor (DSP)) that executes a program stored in the memory. Here, the memory corresponds to, for example, a non-volatile or volatile semiconductor memory such as a random access memory (RAM), a read only memory (ROM), a flash memory, an erasable programmable read only memory (EPROM), or an electrically erasable programmable read only memory (EEPROM), a magnetic disk, a flexible disk, an optical disk, a compact disc, a mini disc, or a digital versatile disk (DVD).

When implemented as dedicated hardware, the device manager 104, the converter 105, the data processor 106, and the security monitor 107 correspond to a single circuit, a complex circuit, a programmed processor, a parallel-programmed processor, an application specific integrated circuit (ASIC), a field programmable gate array (FPGA), or a combination of those, for example.

When the device manager 104, the converter 105, the data processor 106, and the security monitor 107 are implemented by the control circuit including the CPU, the control circuit is a control circuit 400 configured as illustrated in FIG. 8, for example. As illustrated in FIG. 8, the control circuit 400 includes a processor 401 which is the CPU and a memory 402. When implemented by the control circuit 400 illustrated in FIG. 8, the device manager, the converter, the data processor, and the security monitor are implemented by the processor 401 reading and executing a program corresponding to each processing stored in the memory 402. The memory 402 is also used as a temporary memory for each processing executed by the processor 401.

The operation of the sensor monitoring system 500 of the present embodiment will now be described. First, there will be described the procedure from activation of the gateway device 20 and acquisition of the operation information from the management device 11 by the gateway device 20 up to the start of path monitoring between the gateway device 20 and the server 10, or the startup procedure of the gateway device 20.

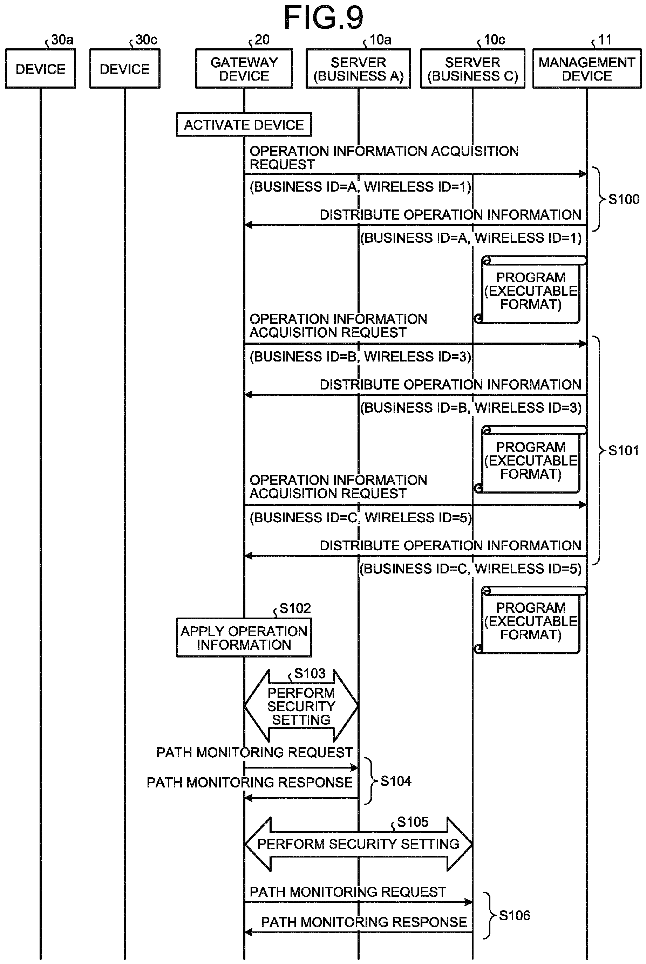

FIG. 9 is a sequence diagram illustrating an example of the startup procedure of the gateway device 20 according to the present embodiment. When activated, the gateway device 20 transmits an operation information acquisition request for acquiring the operation information used in the operation of the device to the management device 11, thereby acquiring the operation information. In the example illustrated in FIG. 9, the gateway device first transmits, to the management device 11, the operation information acquisition request with "A" specified as a business identifier (ID) and "1" specified as a wireless ID, and acquires the operation information from the management device 11 (step S100). The business ID is identification information of the business, where "A" is the business ID of the business A, "B" is the business ID of the business B, and "C" is the business ID of the business C. The wireless ID is identification information of the wireless unit 22, where "1" is the wireless ID of the wireless unit 22a, "3" is the wireless ID of the wireless unit 22b, and "5" is the wireless ID of the wireless unit 22c.

Specifically, in step S100, the device manager 104 of the gateway device 20 generates the operation information acquisition request including the wireless ID and the identifier of the business managing the corresponding device 30, and transmits the operation information acquisition request to the management device 11 via the wired I/F 110d. Note that the storage 108 of the gateway device 20 is assumed to store the IP address of the management device 11 as the internal information, so that the device manager 104 reads the IP address of the management device 11 from the storage 108 and stores the IP address in the destination of an IP packet which is the operation information acquisition request. The IP packet is a packet in the format according to the IP. Moreover, the IP address of the gateway device 20 itself stored in the storage 108 is stored as the source of the IP packet which is the operation information acquisition request transmitted from the gateway device 20. Note that the IP address of the gateway device 20 need not be predetermined but may be assigned by the management device 11 or another device. In this case, processing for acquiring the IP address is executed according to the IP prior to the transmission of the operation information acquisition request.

Upon receiving the operation information acquisition request from the gateway device 20, the management device 11 reads the operation information related to the management business identifier and the wireless ID from the operation information of the gateway device 20 stored in the storage 205, and distributes or transmits the operation information to the gateway device 20. Specifically, upon receiving the operation information acquisition request from the gateway device 20 via the wired I/F 200, the device manager 201 of the management device 11 reads the operation information corresponding to the wireless unit 22 of the gateway device 20 from the storage 205 and transmits the operation information being read to the gateway device 20 via the wired I/F 200. Moreover, the device manager 201 detecting that a new wireless unit 22 is added to the gateway device 20 notifies the function update unit 204 about the addition of the wireless unit 22, so that the function update unit 204 retrieves the operation information from the storage 205 and transmits the operation information to the gateway device 20 via the device manager 201. At this time, when the storage 205 stores a data processing program for format conversion, the data processing program in the executable format is downloaded to the gateway device 20, or transmitted to the gateway device 20 via the wired I/F 200. A general-purpose data transfer protocol such as File Transfer Protocol (FTP) can be used as the communication protocol in this case, and the communication protocol such as Hypertext Transfer Protocol (HTTP) may be used when the data processing program is implemented in the plug-in format using Java or the like.

Next, similarly to step S100, the gateway device 20 transmits to the management device 11 an operation information acquisition request with "B" specified as the business ID and "3" specified as the wireless ID to acquire the operation information, and transmits to the management device 11 an operation information acquisition request with "C" specified as the business ID and "5" specified as the wireless ID to acquire the operation information (step S101). Note that the correspondence between the wireless ID and the business ID is preset in the gateway device 20. Alternatively, the correspondence between the wireless ID and the business ID may be input by an operator.

The operation information distributed to the gateway device 20 by the management device 11 includes frequency information indicating a frequency band used for the wireless signal transmitted and received by the wireless unit 22, transmission power information indicating transmission power when the wireless unit 22 of the gateway device 20 transmits the wireless signal, security setting when connection is established with the server as a host device, information on a path monitoring method using Ping or Stream Control Transmission Protocol (SCTP), information on the data processing policy, and the like.

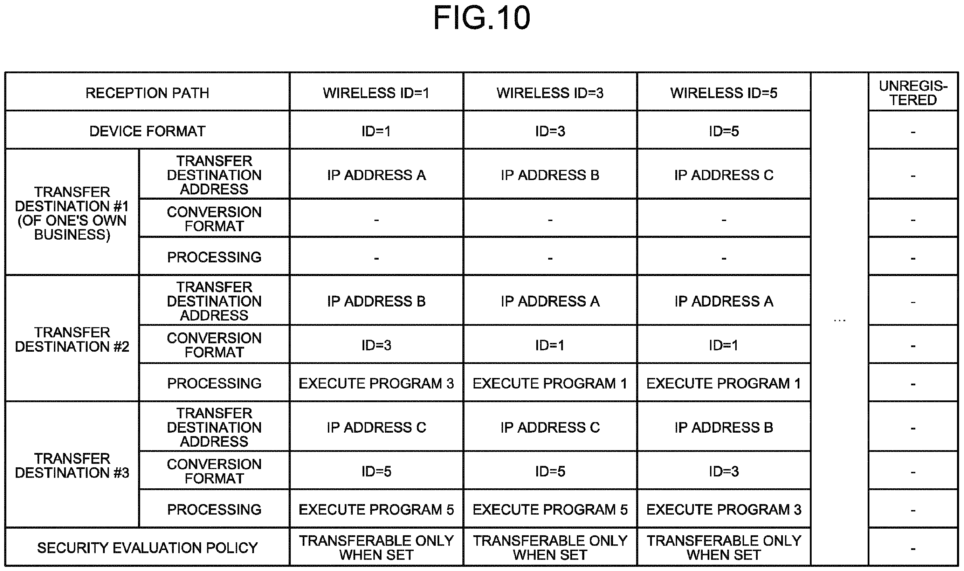

FIG. 10 is a table illustrating an example of the data processing policy included in the operational information distributed to the gateway device 20 by the management device 11. The data processing policy includes a reception path, a device number, that is, the identification number of the device format, the transfer destination list, and the security evaluation policy. The reception path indicates the wireless ID of the wireless unit 22 receiving the sensor information of the device 30, and the device format indicates the identifier specifying the format of the sensor information received by the wireless unit 22. The formats illustrated in FIGS. 3 and 5 as described above can be used as the device format, for example. Note that the identifier is assigned in advance to each device format.

The transfer destination list includes a transfer destination address, a conversion format, and processing, that is, information on the processing program to be executed, for each transfer destination. The transfer destination is the server 10 to which the sensor information is transferred from the gateway device 20. A transfer destination #1 which is the first transfer destination on the transfer destination list in each reception path is the server of the business installing the device 30 corresponding to the reception path. In other words, the server 10 corresponding to the transfer destination #1 is installed by the same business as the business installing the device 30 corresponding to the reception path. The server 10 of the same business as the business installing the device 30 is also referred to as a server of one's own business.

As illustrated in FIG. 10, for example, the device format is a device format corresponding to "ID = 1" when the reception path is "wireless ID = 1". Here, the device format corresponding to "ID = 1" is assumed to be the format illustrated in FIG. 3, and the device format corresponding to "ID = 3" is assumed to be the format illustrated in FIG. 5.

The transfer destination #1 on the transfer destination list with "wireless ID = 1" as the reception path is given the transfer destination address of "IP address A" which is the IP address of the server 10a. The transfer destination #2 on the transfer destination list with "wireless ID = 1" as the reception path is given the transfer destination address of "IP address B", the conversion format of "ID = 3", and the processing of "execution of program 3". Program 3 is a program for converting the device format into the device format corresponding to "ID = 3".

The transfer destination #3 on the transfer destination list with "wireless ID = 1" as the reception path is given the transfer destination address of "IP address C" which is the IP address of the server 10c, the conversion format of "ID = 5", and the processing of "execution of program 5". Program 5 is a program for converting the device format into the device format corresponding to "ID = 5". Note that although FIG. 10 illustrates an example in which program 5 can perform both the conversion from the device format of "ID = 1" into the device format of "ID = 5" and the conversion from the device format of "ID = 3" into the device format of "ID = 5", the conversions may be performed by separate programs.

The security evaluation policy is information indicating the correspondence between the security setting status between the gateway device 20 and the server 10 and whether the information can be transferred to the server of another business, that is, a business different from the business installing the device. The example illustrated in FIG. 10 assumes the application of the IPsec as the security protocol where, for all the reception paths, the security evaluation policy is so set that the information can be transferred only when security is set with the server 10 of another business. Note that in FIG. 10, the policy that the information can be transferred only when security is set with the server 10 of another business is abbreviated as "transferable only when set". The policy that the information can be transferred only when security is set with the server 10 of another business means that, in the case where the server 10 of another business is the transfer destination, the sensor information can be transferred thereto when security is set with the server 10, that is, when the IPsec is already established therewith, and the sensor information is not allowed to be transferred when security is not set with the server 10.

Although the present embodiment illustrates an example in which the reception path corresponds one-to-one to the business installing the device, the ID of the device instead of the wireless ID may be used as the reception path when the sensor information is received from devices installed by a plurality of businesses through one reception path.

The data processing policy is updated each time a new server 10 or reception path is added to the sensor monitoring system 500. The processing program for converting the format is downloaded from the management device 11 to the gateway device 20 as described above. The executable format of the processing program may be a library format or a plug-in format using Java. The present embodiment assumes that the executable format of the processing program is the library format.

Returning to the description of FIG. 9, after step S101, the device manager 104 of the gateway device 20 applies the operation information received (step S102). For example, the device manager 104 performs settings such as setting the frequency band and the transmission power of the wireless I/F 102 on the basis of the frequency information and the transmission power information included in the operation information.

When the operation information indicates that security setting is to be performed with the server 10, the device manager 104 of the gateway device 20 performs security setting on the corresponding wired I/F 110 on the basis of the security procedure indicated by the operation information. Here, the operation information is assumed to indicate that security setting is to be performed with the server 10a and the server 10c, so that the wired I/F 110a of the gateway device 20 first performs security setting with the server 10a on the basis of the security procedure indicated in the operation information (step S103). Specifically, when the IPsec is specified as the security procedure, for example, the security setting is performed on the basis of a procedure such as Internet Key Exchange Protocol Version 2 (IKEv2) to establish an IPsec security association. Upon completion of the security setting, the wired I/F 110a notifies the security monitor 107 that the security setting of the path to the server 10a is done. Note that when the security setting of the path to the server 10a is canceled, the wired I/F 110a notifies the security monitor 107 accordingly.

When path monitoring is requested in the operation information, the wired I/F 110a starts transmission/reception of a path monitoring request and a path monitoring response for the purpose of health check (step S104). The present embodiment assumes the health check using Ping as the path monitoring method, but the present invention is not limited thereto. Similarly, the wired I/F 110c of the gateway device 20 performs security setting with the server 10c on the basis of the security procedure indicated in the operation information (step S105), and starts transmission/reception of a path monitoring request and a path monitoring response for the purpose of health check (step S106) when path monitoring is requested in the operation information. Upon completion of the security setting, the wired I/F 110c notifies the security monitor 107 that the security setting of the path to the server 10c is done. Note that when the security setting of the path to the server 10c is canceled, the wired I/F 110c notifies the security monitor 107 accordingly. The security monitor 107 monitors the security setting status with each server 10 on the basis of the notification from each wired I/F 110.

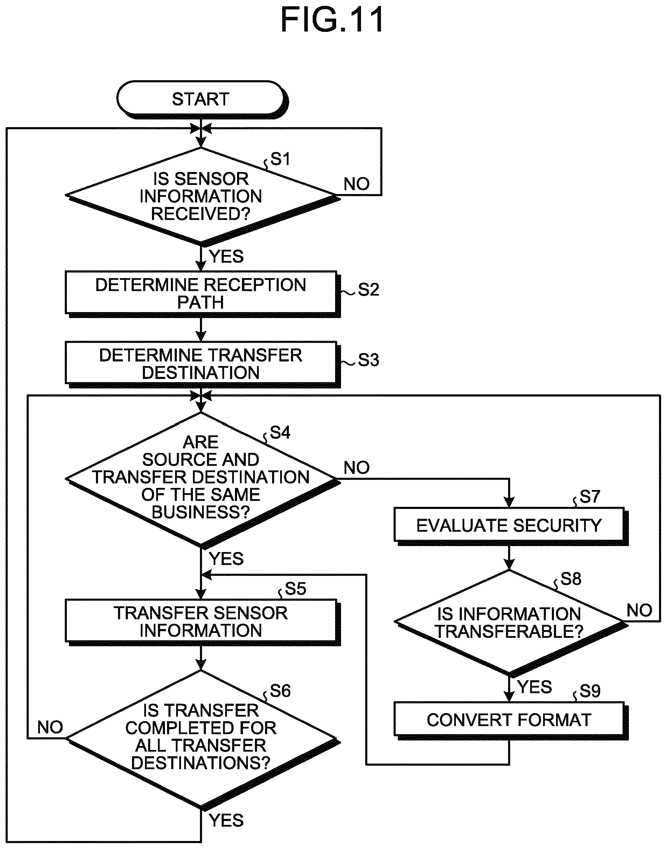

Next, the operation of the gateway device 20 transferring the sensor information will be described. FIG. 11 is a flowchart illustrating an example of a sensor information transfer procedure of the gateway device 20. The data processor 106 of the gateway device 20 determines whether or not the sensor information transmitted from the device 30 is received (step S1). Note that the wireless unit 22 receives the sensor information via the antenna 23 and passes the sensor information to the data processor 106 via the driver group 103. At this time, the driver group 103 determines the wireless unit 22 receiving the sensor information, and passes the wireless ID corresponding to the wireless unit 22 to the data processor 106 together with the sensor information. Step S1 is repeated if no sensor information is received (No in step S1).

If the sensor information is received (Yes in step S1), the data processor 106 determines the reception path through which the sensor information is received (step S2). Specifically, the data processor 106 determines the reception path on the basis of the wireless ID received together with the sensor information. Next, the data processor 106 determines the transfer destination of the sensor information on the basis of the data processing policy in the operation information stored in the storage 108 and the reception path (step S3). When the reception path corresponds to "wireless ID = 1", for example, the data processor 106 determines the transfer destinations corresponding to "wireless ID = 1" on the transfer destination list in the data processing policy illustrated in FIG. 10 to be the transfer destination of the sensor information.

Next, the data processor 106 selects one of the transfer destinations determined in step S3, and determines whether or not the source, that is, the device 30 from which the sensor information is transmitted, and the transfer destination are of the same business (step S4). Specifically, in the case of using the data processing policy illustrated in FIG. 10, the transfer destination #1 is the transfer destination of one's own business, that is, the device 30 being the source and the transfer destination are of the same business, whereby the data processor 106 determines that the source and the transfer destination are of the same business when the selected transfer destination is the transfer destination #1, or determines that the source and the transfer destination are not of the same business when the selected transfer destination is the transfer destination #2 or a subsequent destination.

If the source and the transfer destination are of the same business (Yes in step S4), the data processor 106 transfers the sensor information to the selected transfer destination via the driver group 103 and the wired I/F 110 as the second communication unit (step S5). At this time, the sensor information is transmitted while stored in the IP packet in the wired I/F 110. The data processor 106 determines whether or not transfer to all the transfer destinations, that is, all the transfer destinations included in the transfer destination list of the data processing policy, is completed (step S6), and returns to step S1 if the transfer to all the transfer destinations is completed (Yes in step S6).

If the transfer to any of the transfer destinations is not completed (No in step S6), the data processor 106 changes the transfer destination selected and returns to step S4. If the source and the transfer destination are not of the same business (No in step S4), the data processor 106 performs a security evaluation (step S7). Specifically, the data processor 106 acquires the security setting status corresponding to the selected transfer destination from the security monitor 107. Then, on the basis of the security setting status and the security evaluation policy in the data processing policy, the data processor 106 determines whether or not the sensor information can be transferred to the selected transfer destination (step S8). If the sensor information can be transferred (Yes in step S8), the data processor 106 performs format conversion on the basis of the data processing policy (step S9) and proceeds to step S5. That is, in step S5, the second communication unit transmits the second device information which is the information after subjected to the conversion to the server to which the information is determined to be transferable by the data processor 106. Specifically, in step S9, the data processor 106 performs the format conversion by causing the converter 105 to execute the program specified by the processing on the transfer destination list in the data processing policy. If the sensor information cannot be transferred (No in step S8), the data processor 106 does not transfer the sensor information to the selected transfer destination, changes the transfer destination selected, and returns to step S4.

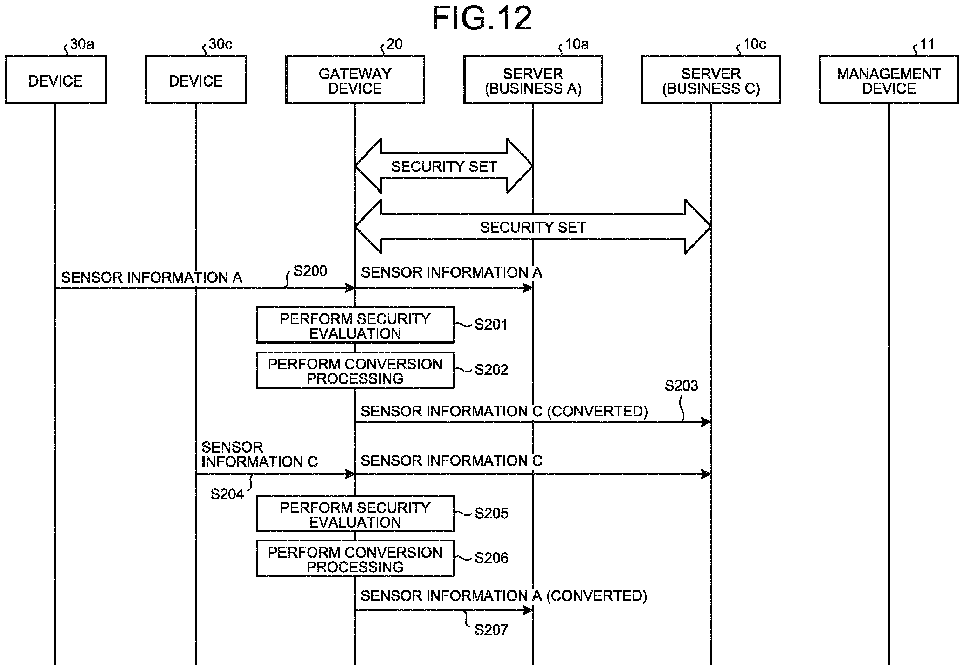

FIG. 12 is a sequence diagram illustrating an example of data processing of the gateway device 20 when security is applied. The security between the gateway device 20 and each of the server 10a and the server 10c is already set, and the security monitor 107 of the gateway device 20 recognizes that the security between the gateway device and each of the server 10a and the server 10c is already set. The gateway device 20 is assumed to have received the data processing policy illustrated in FIG. 10 from the management device 11.

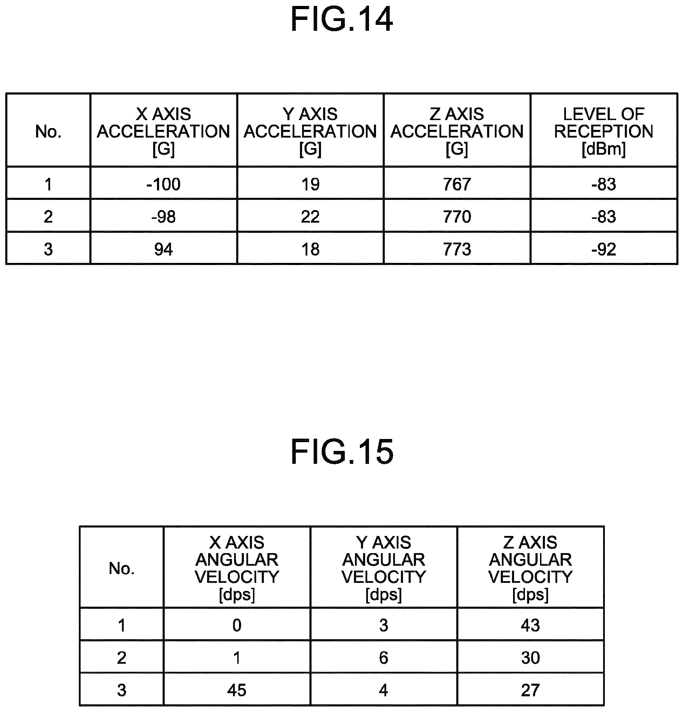

Upon receiving the sensor information A transmitted from the device 30a via the antenna 23a and the wireless unit 22a of the gateway device 20, the data processor 106 of the gateway device 20 transfers the sensor information A to the server 10a corresponding to the transfer destination #1 in the data processing policy on the basis of the data processing policy (step S200). FIG. 14 is a table illustrating an example of the sensor information A. As illustrated in FIG. 14, the sensor information A has the device format similar to the format illustrated in FIG. 3.

On the other hand, the data processor 106 performs security evaluation processing on the server 10c corresponding to the transfer destination #3 in the data processing policy (step S201). Since the security is already set with the server 10c, the data processor 106 determines that information can be transferred thereto and causes the converter 105 to execute program 5 to perform conversion processing, that is, format conversion (step S202), thereby transferring sensor information C (converted) being the sensor information after subjected to the format conversion to the server 10c via the wired I/F 110c (step S203). The server 10c can thus read and use the sensor information transmitted from the device 30a by the processing similar to the processing at the time of reading the sensor information transmitted from the device 30c installed by one's own business.

Likewise, upon receiving the sensor information C transmitted from the device 30c via the antenna 23c and the wireless unit 22c of the gateway device 20, the data processor 106 of the gateway device 20 transfers the sensor information C to the server 10c corresponding to the transfer destination #1 in the data processing policy on the basis of the data processing policy (step S204). FIG. 15 is a table illustrating an example of the sensor information C. As illustrated in FIG. 15, the sensor information C has the device format similar to the format illustrated in FIG. 5.

On the other hand, the data processor 106 performs security evaluation processing on the server 10a corresponding to the transfer destination #2 in the data processing policy (step S205). Since the security is already set with the server 10a, the data processor 106 determines that information can be transferred thereto and causes the converter 105 to execute program 1 to perform conversion processing, that is, format conversion (step S206), thereby transferring sensor information A (converted) being the sensor information after subjected to the format conversion to the server 10a via the wired I/F 110a (step S207). The server 10a can thus read and use the sensor information transmitted from the device 30c by the processing similar to the processing at the time of reading the sensor information transmitted from the device 30a installed by one's own business. Note that although FIG. 12 omits the transfer processing between the gateway device 20 and the server 10b, the transfer processing for the server 10b is performed similarly on the basis of the data processing policy.

As described above, the wired I/F 110 as the second communication unit transmits the first device information to a predetermined specific server associated with each device among the plurality of servers 10, and transmits the second device information being the information after subjected to the format conversion to the plurality of servers other than the specific server when the data processor 106 determines that information can be transferred to the servers. An example of the specific server is the server installed by the same business as the business installing the device 30, as described above.

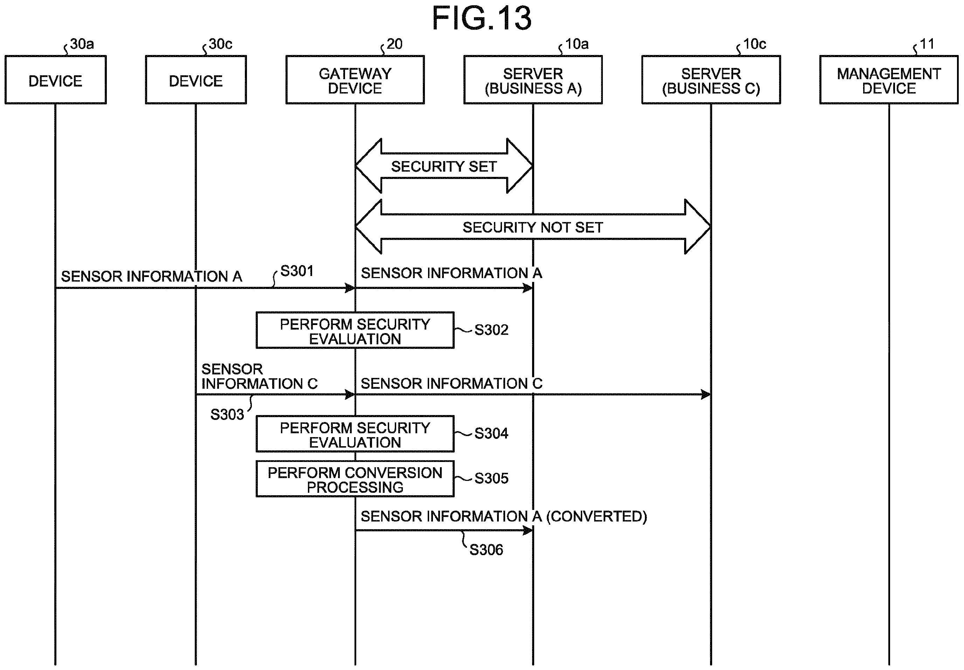

FIG. 13 is a sequence diagram illustrating an example of data processing of the gateway device when security is not set. FIG. 13 illustrates an example in which security between the gateway device 20 and the server 10a is already set while security between the gateway device 20 and the server 10c is not set. Upon receiving the sensor information A transmitted from the device 30a via the antenna 23a and the wireless unit 22a of the gateway device 20 in such state, the data processor 106 of the gateway device 20 transfers the sensor information A to the server 10a corresponding to the transfer destination #1 in the data processing policy as with step S200 of FIG. 12 (step S301).

The data processor 106 performs security evaluation processing on the server 10c corresponding to the transfer destination #3 in the data processing policy (step S302). Since security is not set with the server 10c, the data processor 106 determines that information cannot be transferred thereto and does not transfer the information to the server 10c.

Upon receiving the sensor information C transmitted from the device 30c via the antenna 23c and the wireless unit 22c of the gateway device 20, the data processor 106 of the gateway device 20 transfers the sensor information C to the server 10c corresponding to the transfer destination #1 in the data processing policy on the basis of the data processing policy (step S303). Although security is not set with the server 10c, the information is transferred thereto when the transfer destination is of one's own business. Steps S304 to S306 are similar to steps S205 to S207 in FIG. 12. Note that although FIG. 13 omits the transfer processing between the gateway device 20 and the server 10b, the transfer processing for the server 10b is performed similarly on the basis of the data processing policy.

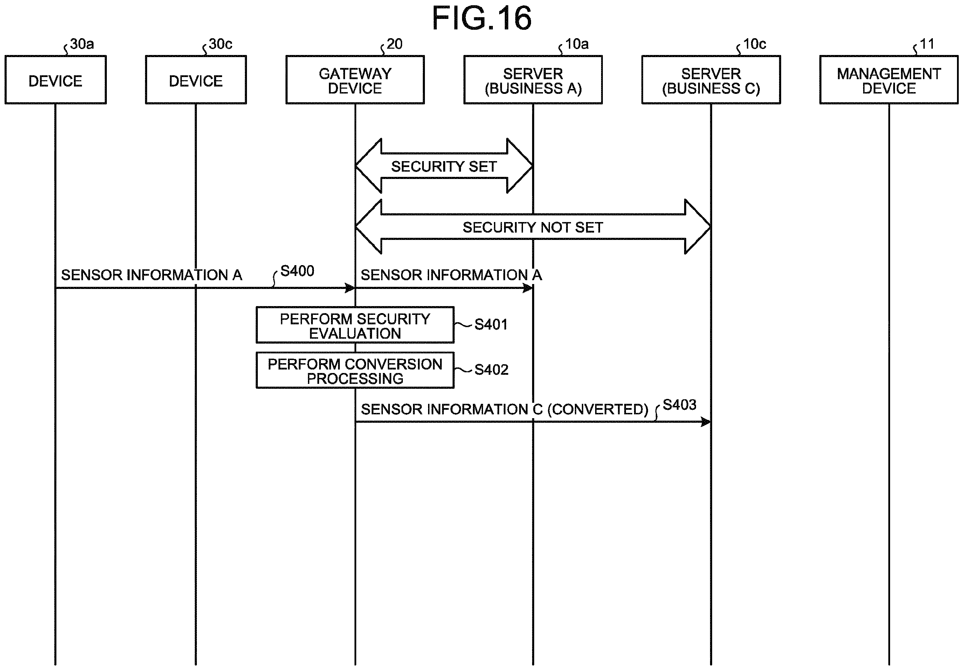

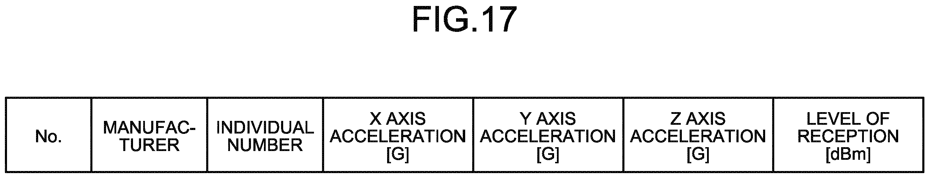

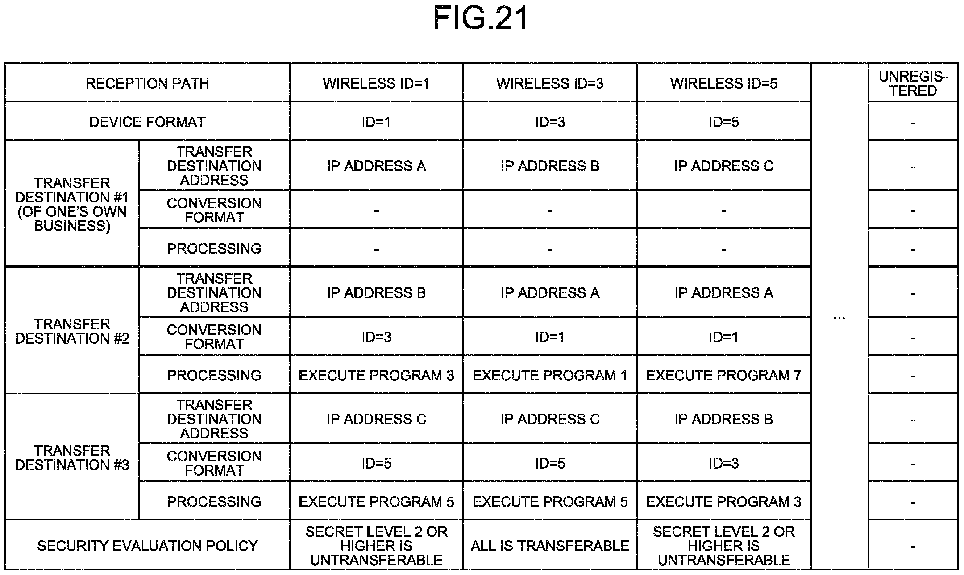

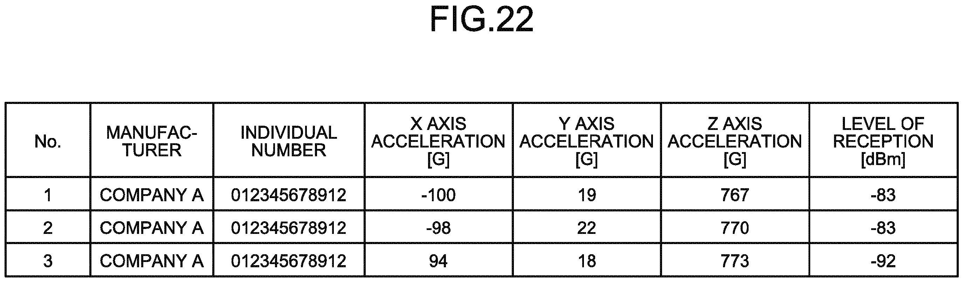

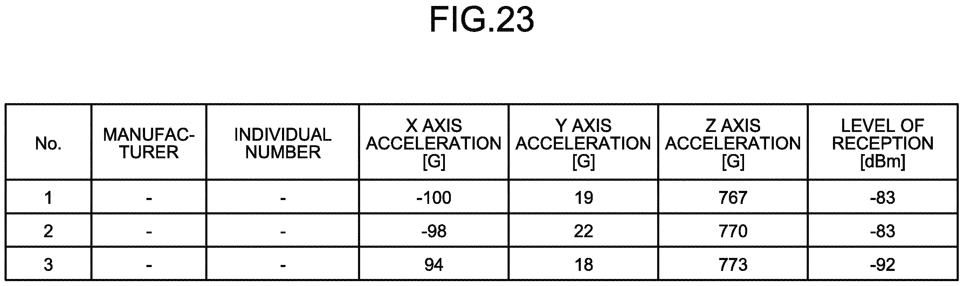

FIG. 16 is a sequence diagram illustrating another example of data processing of the gateway device when security is not set. Instead of the examples illustrated in FIGS. 3, 4, 5, and 6, the sequence diagram illustrated in FIG. 16 is based on formats and definitions of the formats illustrated in FIGS. 17, 18, 19, and 20 and a data processing policy illustrated in FIG. 21. The device format is based on device formats illustrated in FIGS. 22 and 23.

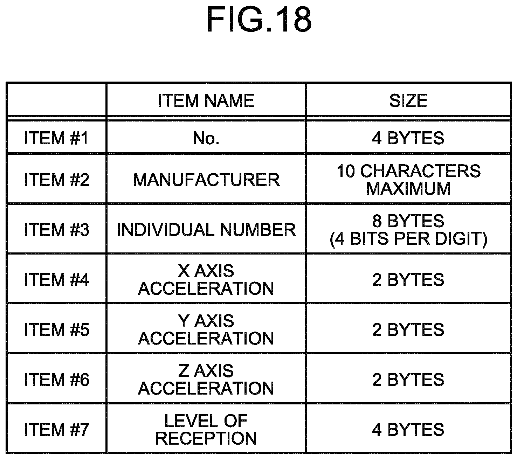

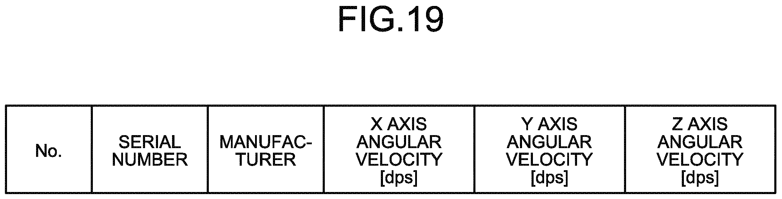

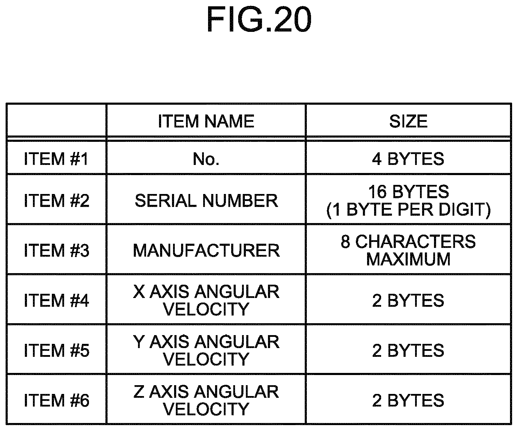

FIG. 17 is a table illustrating an example of the format of the server 10a, and FIG. 18 is a table illustrating the definition of the format illustrated in FIG. 17. FIG. 19 is a table illustrating an example of the format of the server 10c, and FIG. 20 is a table illustrating the definition of the format illustrated in FIG. 19. In the examples illustrated in FIGS. 17 and 18, information indicating the manufacturer of the device 30a and an individual number are added to the format in contrast to the examples illustrated in FIGS. 3 and 4. In the examples illustrated in FIGS. 19 and 20, information indicating the manufacturer of the device 30c and an individual number such as a serial number are added to the format in contrast to the examples illustrated in FIGS. 5 and 6. FIG. 21 is a table illustrating an example of the data processing policy assuming the formats illustrated in FIGS. 17, 18, 19, and 20.

In the data processing policy illustrated in FIG. 21, the security evaluation policy is modified from that of the data processing policy illustrated in FIG. 10, but the rest is similar to the example illustrated in FIG. 10. In the security evaluation policy illustrated in FIG. 21, a secret level is preset for each item in the device format so that the security evaluation policy indicates whether or not data of each item can be transferred in accordance with the secret level.

For example, among items in each device format, the information indicating the manufacturer and an individual number are defined as individual information while the other items are defined as detected information. The individual information is set to secret level 2, and the detected information is set to secret level 1. At this time, when the security evaluation policy is so set that information of secret level 2 or higher is untransferable as illustrated in FIG. 21, the individual information is untransferable while the detected information is transferable when security is not set. In the example illustrated in FIG. 21, all items of the sensor information is transferable when security is already set. When the security evaluation policy is so set that all is transferable, all the items of the sensor information is transferable even when security is not set. FIG. 22 is a table illustrating the device format of the device 30a. FIG. 23 is a table illustrating the format of the sensor information when the sensor information of the device 30a is transferred to the server 10c. As illustrated in FIG. 22 and FIG. 23, the individual information is deleted when the sensor information of the device 30a is transferred to the server 10c. The information making up the sensor information which is the first device information is classified into a plurality of levels, that is, secret levels, and the security evaluation policy which is a condition for determining whether or not information can be transferred to the server is set for each level. The data processor 106 determines whether or not to transfer the information making up the sensor information to the server for each level on the basis of the security evaluation policy, and the converter 105 converts, for each server 10, the information of the level determined to be transferable by the data processor 106 among the sensor information into the second device information.

FIG. 16 illustrates an example in which security between the gateway device 20 and the server 10a is already set while security between the gateway device 20 and the server 10c is not set. Upon receiving the sensor information A transmitted from the device 30a via the antenna 23a and the wireless unit 22a of the gateway device 20 in such state, the data processor 106 of the gateway device 20 transfers the sensor information A to the server 10a corresponding to the transfer destination #1 in the data processing policy (step S400).

The data processor 106 performs security evaluation processing on the server 10c corresponding to the transfer destination #3 in the data processing policy (step S401). With security not being set with the server 10c and the security evaluation policy not allowing transfer of information that is secret level 2 or higher, the individual information in the sensor information A is invalidated, the converter 105 executes program 5 to perform conversion processing, that is, format conversion (step S402), and sensor information C (converted) which is the sensor information after subjected to the format conversion is transferred to the server 10c via the wired I/F 110c (step S403). The individual information can be invalidated by a method that replaces the individual information with a fixed value such as all zeros, for example. The transmission of the detected information without the individual information as described above allows the detected information to be shared among a plurality of servers while preventing a malicious attack on the device 30.

As described above, according to the present embodiment, the gateway device 20 is provided with the converter 105 that performs the format conversion required for each destination server and the security monitor 107 that monitors the security set with the server 10, thereby determining the transfer destination on the basis of the security setting information. The server 10 can thus use the sensor information of the device 30 managed by another business without changing the setting of the server 10. That is, a plurality of servers can share the information of the device 30 while ensuring security. Moreover, the server not knowing the wireless system and the sensor type of each device can be provided with the information transmitted from the device installed by another business.

### Second Embodiment.

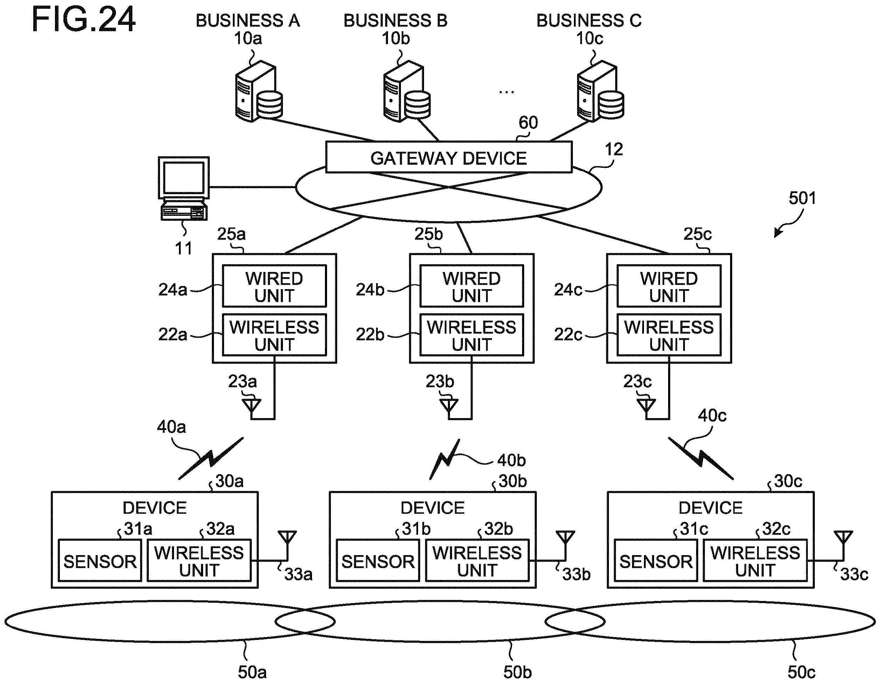

FIG. 24 is a diagram illustrating an example of the configuration of a sensor monitoring system according to a second embodiment of the present invention. A sensor monitoring system 501 of the second embodiment which is the monitoring system according to the present invention is similar to the sensor monitoring system 500 of the first embodiment except that a gateway device 60 and access points 25a, 25b, and 25c as communication devices are included instead of the gateway device 20 of the sensor monitoring system 500 of the first embodiment. A component having a function similar to that of the first embodiment will be assigned a reference numeral identical to that assigned to the component in the first embodiment so that a redundant description will be omitted. Differences from the first embodiment will be described below.

The first embodiment includes the wireless unit 22 in the gateway device 20, whereas the present embodiment includes the wireless units 22a, 22b, and 22c in the access points (hereinafter abbreviated as APs) 25a, 25b, and 25c transmitting and receiving wireless signals through the wireless channels 40a, 40b, and 40c, respectively. The APs 25a, 25b, and 25c also include the antennas 23a, 23b, and 23c, respectively. As in the first embodiment, the wireless units 22a, 22b, and 22c perform wireless communication with the devices 30a, 30b, and 30c via the antennas 23a, 23b, and 23c, respectively. The APs 25a, 25b, and 25c further include wired units 24a, 24b, and 24c, respectively. The wired units 24a, 24b, and 24c are connected to the Internet network 12 and transmit signals received by the corresponding wireless units 22a, 22b, and 22c as IP packets to the gateway device 60 via the Internet network 12. The gateway device 60 transfers sensor information received as the IP packets from the wired units 24a, 24b, and 24c to the servers 10 on the basis of the data processing policy as in the first embodiment.

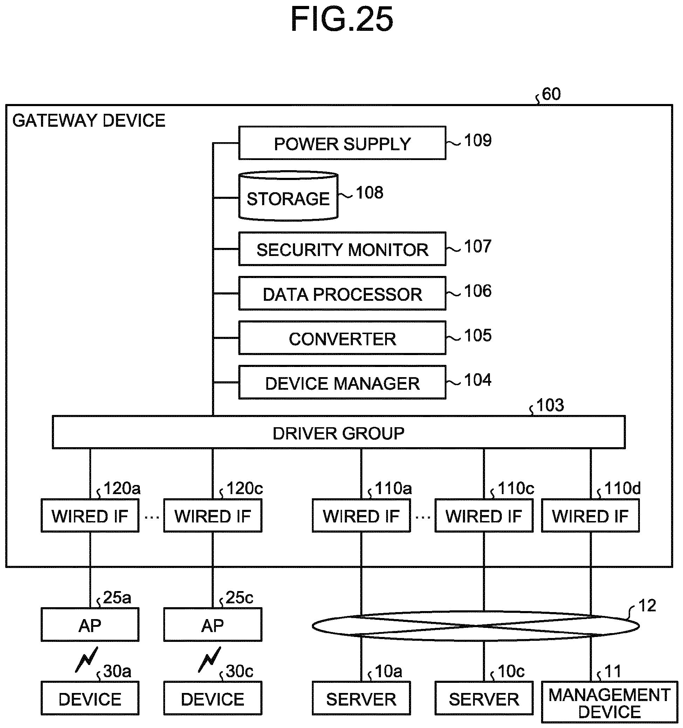

FIG. 25 is a diagram illustrating an example of the configuration of the gateway device 60. The gateway device 60 is similar to the gateway device 20 of the first embodiment except that wired I/Fs 120a, 120b, and 120c are included instead of the wireless units 22a, 22b, and 22c and the antennas 23a, 23b, and 23c. Note that illustration of the wired I/F 120b is omitted. The wired I/Fs 120a, 120b, and 120c output the sensor information received as the IP packets from the corresponding APs 25a, 25b, and 25c to the data processor 106. The IP packet includes the IP address of the source AP 25, or the wired unit of the AP 25.

The connection between the wired I/F 120 and the AP 25 assumes transmission/reception processing using the IP, but a communication protocol such as Point to Point Protocol over Ethernet (PPPoE) may be used. Moreover, although one wired I/F 120 is provided for each AP 25, the wired I/F 120 can be shared.

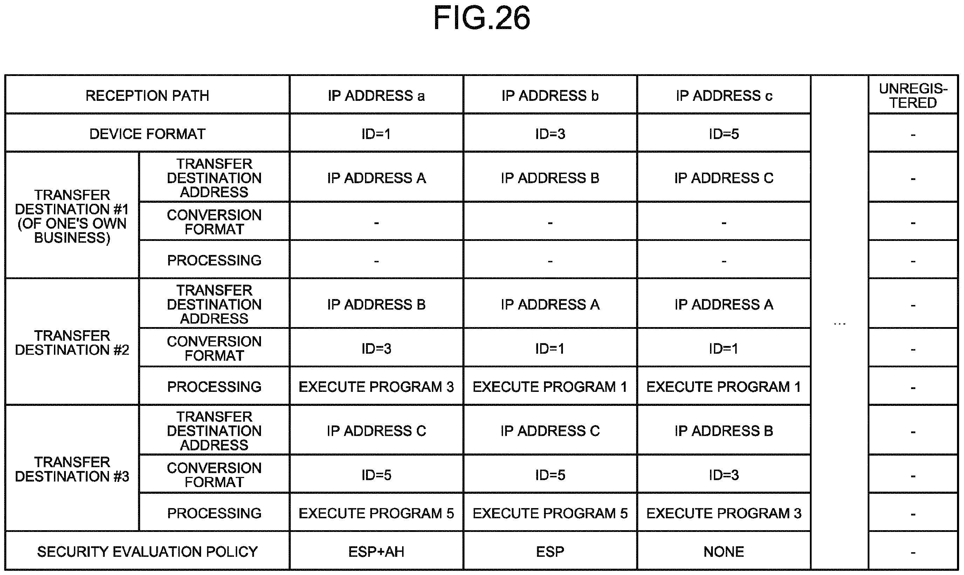

FIG. 26 is a table illustrating an example of the data processing policy according to the present embodiment. The present embodiment uses the IP addresses of the wired units 24, 24b, and 24c as the identifier of the reception path to be able to determine the reception path as the first embodiment does. The security evaluation policy in FIG. 26 illustrates an example in which a determination is made on the basis of the status of application of the security algorithm, but the security evaluation policy similar to the security evaluation policy of the first embodiment may be used. The example illustrated in FIG. 26 sets the data processing policy that allows all the sensor information to be shared when Encapsulating Security Payload (ESP) and Authentication Header (AH) defined by the IPsec are applied in the case where the reception path is "IP address a", allows all the sensor information to be shared when the ESP is applied in the case where the reception path is "IP address b", and allows all the sensor information to be shared even in an environment where security such as the IPsec is not applied when the reception path is "IP address c". The operation of the present embodiment other than that described above is similar to that of the first embodiment.

As described above, according to the present embodiment in which the wireless unit 22 is separated from the gateway device 60, the server 10 can use the sensor information of the device 30 managed by another business without changing the setting of the server 10, as with the first embodiment. That is, a plurality of servers can share the information of the device while ensuring security. Moreover, the server not knowing the wireless system and the sensor type of each device can be provided with the information transmitted from the device installed by another business.

### Reference Signs List

10, 10a, 10b, 10c server; 11 management device; 12 Internet network; 20, 60 gateway device; 21 gateway unit; 22a, 22b, 22c, 22, 32a, 32b, 32c, 32 wireless unit; 23a, 23b, 23c, 23, 33a, 33b, 33c antenna; 30a, 30b, 30c, 30 device; 31a, 31b, 31c, 31 sensor; 40a, 40b, 40c, 40 wireless channel; 50a, 50b, 50c, 50 service area; 101a, 101c, 101 modem; 102a, 102c, 102 wireless I/F; 103 driver group; 104, 201, 301 device manager; 105 converter; 106 data processor; 107 security monitor; 108, 205, 305 storage; 109, 206, 306 power supply; 110a, 110c, 110d, 120a, 120b, 120c, 200, 300 wired I/F; 202, 302 display; 203, 303 input unit; 204 function update unit; 304 analysis unit; 400 control circuit; 401 processor; 402 memory; 25a, 25c, 25 AP.

## Claims

1. A gateway device (20) comprising:
a security monitor (107) to monitor a security setting status of a communication path to each of a plurality of servers (10a, 10b, 10c);
a first communication unit (22a, 22b, 22c) to receive first device information that is a first piece of information transmitted from a device (30);
a converter (105) to convert at least a part of the first device information into second device information that is a second piece of information in a format determined depending on the servers (10a, 10b, 10c) as a transfer destination;
a determination unit (106) to determine, for each of the servers (10a, 10b, 10c), whether or not the second device information is to be transferred to the server on the basis of the security setting status of the communication path to the server; and
a second communication unit (110) to transmit the second device information to the server that is determined to be able to receive the second device information by the determination unit (106),
said gateway device (20) being **characterized by** a secret level which is preset for each device information in the format so that the determination unit (106) determines whether or not data is to be transferred in accordance with the secret level.

2. The gateway device (20) according to claim 1, wherein the second communication unit (110) transmits the first device information to a predetermined specific server associated with each device among the plurality of servers (10a, 10b, 10c), and transmits the second device information to the plurality of servers other than the specific server when the determination unit (106) determines that the second device information can be transferred to the servers.

3. A system comprising the gateway device (20), the plurality of servers (10a, 10b, 10c), the device (30) and the specific server according to claim 2, wherein the plurality of servers (10a, 10b, 10c) includes servers installed by different entities, the device (30) corresponds to a plurality of the devices (30a, 30b, 30c) that includes devices installed by different entities, and
the specific server is a server installed by the same entity as the entity installing the device (30).

4. The gateway device (20) according to any one of claims 1 to 3, wherein information making up the first device information is classified into a plurality of levels, and a condition for determining whether or not information is to be transferred to any of the servers (10a, 10b, 10c) is determined for each of the levels,
the determination unit (106) determines whether or not to transfer the information making up the first device information to any of the servers (10a, 10b, 10c) for each of the levels on the basis of the condition, and
the converter (105) converts information of the level determined to be transferable by the determination unit (106) among the first device information into the second device information for each of the servers (10a, 10b, 10c).

5. The gateway device (20) according to any one of claims 1 to 4, wherein the device includes a sensor (31), and
the first device information includes information acquired by the sensor (31).

6. A transfer method comprising:
a first step in which a gateway device (20) monitors a security setting status of a communication path to each of a plurality of servers (10a, 10b, 10c);
a second step in which the gateway device (20) receives first device information that is a first piece of information transmitted from a device (30);
a third step in which the gateway device (20) converts at least a part of the first device information into second device information that is a second piece of information in a format determined depending on the servers (10a, 10b, 10c) as a transfer destination;
a fourth step in which the gateway device (20) determines, for each of the servers (10a, 10b, 10c), whether or not the second device information can be transferred to the server on the basis of the security setting status of the communication path to the server; and
a fifth step in which the gateway device (20) transmits the second device information to the server that is determined to be able to receive the second device information in the fourth step,
said transfer method being **characterized by** a secret level which is preset for each device information in the format so as to determine whether or not data is to be transferred in accordance with the secret level.

## Patentansprüche

1. Gateway-Einrichtung (20), umfassend:
eine Sicherheitsüberwachung (107), um einen Sicherheitseinstellungsstatus eines Kommunikationspfades zu jedem einer Vielzahl von Servern (10a, 10b, 10c) zu überwachen;
eine erste Kommunikationseinheit (22a, 22b, 22c), um erste Einrichtungsinformationen, die erste von einer Einrichtung (30) übertragene Informationen sind, zu empfangen;
einen Konverter (105), um zumindest einen Teil der ersten Einrichtungsinformationen in zweite Einrichtungsinformationen umzuwandeln, die eine zweite Information in einem Format ist, das in Abhängigkeit von den Servern (10a, 10b, 10c) als Transferziel bestimmt wird;
eine Bestimmungseinheit (106), um auf der Grundlage des Sicherheitseinstellungsstatus des Kommunikationspfads zum Server für jeden der Server (10a, 10b, 10c) zu bestimmen, ob die zweiten Einrichtungsinformationen an den Server übertragen werden sollen oder nicht; und
eine zweite Kommunikationseinheit (110), um die zweiten Einrichtungsinformationen an den Server zu übertragen, der von der Bestimmungseinheit (106) bestimmt ist, die zweiten Einrichtungsinformationen empfangen zu können,
wobei die Gateway-Einrichtung (20) durch eine Geheimebene gekennzeichnet ist, die für jede Einrichtungsinformation in dem Format voreingestellt ist, so dass die Bestimmungseinheit (106) in Übereinstimmung mit der Geheimebene bestimmt, ob Daten zu übertragen sind oder nicht.

2. Gateway-Einrichtung (20) nach Anspruch 1, wobei die zweite Kommunikationseinheit (110) die ersten Einrichtungsinformationen an einen vorbestimmten spezifischen Server überträgt, der jeder Einrichtung aus der Vielzahl von Servern (10a, 10b, 10c) zugeordnet ist, und die zweiten Einrichtungsinformationen an die Vielzahl von anderen Servern als den spezifischen Server überträgt, wenn die Bestimmungseinheit (106) bestimmt, dass die zweiten Einrichtungsinformationen an die Server übertragen werden können.

3. System, umfassend die Gateway-Einrichtung (20), eine Vielzahl von Servern (10a, 10b, 10c), die Einrichtung (30) und den spezifischen Server gemäß Anspruch 2, wobei
die Vielzahl von Servern (10a, 10b, 10c) Server umfasst, die durch verschiedene Einheiten installiert sind,
die Einrichtung (30) einer Vielzahl von Einrichtungen (30a, 30b, 30c) entspricht, die Einrichtungen umfasst, die von verschiedenen Einheiten installiert sind, und
der spezifische Server ein Server ist, der durch die gleiche Einheit installiert ist, wie die Einheit, die die Einrichtung (30) installiert.

4. Gateway-Einrichtung (20) nach einem der Ansprüche 1 bis 3, wobei Informationen, aus denen die ersten Einrichtungsinformationen bestehen, in eine Vielzahl von Ebenen klassifiziert werden und für jede der Ebenen eine Bedingung zur Bestimmung, ob Informationen zu einem der Server (10a, 10b, 10c) zu übertragen sind oder nicht, bestimmt wird,
die Bestimmungseinheit (106) auf der Grundlage der Bedingung für jede der Ebenen bestimmt, ob die Informationen, aus denen die ersten Einrichtungsinformationen bestehen, an einen der Server (10a, 10b, 10c) zu übertragen sind oder nicht, und
der Konverter (105) Informationen der Ebene, die von der Bestimmungseinheit (106) als übertragbar bestimmt wird, aus den ersten Einrichtungsinformationen in die zweiten Einrichtungsinformationen für jeden der Server (10a, 10b, 10c) umwandelt.

5. Gateway-Einrichtung (20) nach einem der Ansprüche 1 bis 4, wobei die Einrichtung einen Sensor (31) umfasst, und
die ersten Einrichtungsinformationen Informationen umfassen, die durch den Sensor (31) beschafft wurden.

6. Übertragungsverfahren, umfassend:
einen ersten Schritt, in dem eine Gateway-Einrichtung (20) einen Sicherheitseinstellungsstatus eines Kommunikationspfades zu jedem einer Vielzahl von Servern (10a, 10b, 10c) überwacht;
einen zweiten Schritt, in dem die Gateway-Einrichtung (20) erste Einrichtungsinformationen, die eine erste von einer Einrichtung (30) übertragene Information ist, empfängt;
einen dritten Schritt, in dem die Gateway-Einrichtung (20) zumindest einen Teil der ersten Einrichtungsinformationen in zweite Einrichtungsinformationen umwandelt, die eine zweite Information in einem Format ist, das in Abhängigkeit von den Servern (10a, 10b, 10c) als Transferziel bestimmt wird;
einen vierten Schritt, in dem die Gateway-Einrichtung (20) für jeden der Server (10a, 10b, 10c) auf der Grundlage des Sicherheitseinstellungsstatus des Kommunikationspfades zum Server bestimmt, ob die zweiten Einrichtungsinformationen an den Server übertragen werden können; und
einen fünften Schritt, in dem die Gateway-Einrichtung (20) die zweiten Einrichtungsinformationen an den Server überträgt, der bestimmt ist, die zweiten Einrichtungsinformationen im vierten Schritt empfangen zu können,
wobei das Transferverfahren durch eine Geheimebene gekennzeichnet ist, die für jede Einrichtungsinformation in dem Format voreingestellt ist, um zu bestimmen, ob Daten gemäß der Geheimebene zu übertragen sind oder nicht.

## Revendications

1. Dispositif de passerelle (20) comprenant :
un moniteur de sécurité (107) destiné à surveiller un état de paramètre de sécurité d'un trajet de communication vers chaque serveur d'une pluralité de serveurs (10a, 10b, 10c) ;
une première unité de communication (22a, 22b, 22c) destinée à recevoir des premières informations de dispositif qui correspondent à un premier élément d'information transmis à partir d'un dispositif (30) ;
un convertisseur (105) destiné à convertir au moins une partie des premières informations de dispositif en des secondes informations de dispositif qui correspondent à un second élément d'information dans un format déterminé en fonction des serveurs (10a, 10b, 10c) agissant en qualité de destination de transfert ;
une unité de détermination (106) destinée à déterminer, pour chacun des serveurs (10a, 10b, 10c), si les secondes informations de dispositif doivent être transférées ou non au serveur, sur la base de l'état de paramètre de sécurité du trajet de communication vers le serveur ; et
une seconde unité de communication (110) destinée à transmettre les secondes informations de dispositif au serveur qui est déterminé comme étant en mesure de recevoir les secondes informations de dispositif, par l'unité de détermination (106), ledit dispositif de passerelle (20) étant **caractérisé par** un niveau de secret qui est prédéfini pour chacune des informations de dispositif dans le format, de sorte que l'unité de détermination (106) détermine si des données doivent être transférées ou non, conformément au niveau de secret.

2. Dispositif de passerelle (20) selon la revendication 1, dans lequel la seconde unité de communication (110) transmet les premières informations de dispositif à un serveur spécifique prédéterminé associé à chaque dispositif parmi la pluralité de serveurs (10a, 10b, 10c), et transmet les secondes informations de dispositif à la pluralité de serveurs autres que le serveur spécifique, lorsque l'unité de détermination (106) détermine que les secondes informations de dispositif peuvent être transférées aux serveurs.

3. Système comprenant le dispositif de passerelle (20), la pluralité de serveurs (10a, 10b, 10c), le dispositif (30) et le serveur spécifique selon la revendication 2, dans lequel la pluralité de serveurs (10a, 10b, 10c) inclut des serveurs installés par différentes entités, le dispositif (30) correspond à une pluralité de dispositifs (30a, 30b, 30c) qui inclut des dispositifs installés par différentes entités, et le serveur spécifique est un serveur installé par la même entité que l'entité qui installe le dispositif (30).

4. Dispositif de passerelle (20) selon l'une quelconque des revendications 1 à 3, dans lequel les informations constituant les premières informations de dispositif sont classées en une pluralité de niveaux, et une condition pour déterminer si les informations doivent être transférées ou non à l'un quelconque des serveurs (10a, 10b, 10c) est déterminée pour chacun des niveaux ;
l'unité de détermination (106) détermine si transférer ou non les informations constituant les premières informations de dispositif à l'un quelconque des serveurs (10a, 10b, 10c) pour chacun des niveaux sur la base de la condition ; et
le convertisseur (105) convertit des informations du niveau, déterminées comme étant transférables par l'unité de détermination (106), parmi les premières informations de dispositif en des secondes informations de dispositif pour chacun des serveurs (10a, 10b, 10c).

5. Dispositif de passerelle (20) selon l'une quelconque des revendications 1 à 4, dans lequel le dispositif inclut un capteur (31) ; et
les premières informations de dispositif incluent des informations acquises par le capteur (31).

6. Procédé de transfert comprenant :
une première étape dans laquelle un dispositif de passerelle (20) surveille un état de paramètre de sécurité d'un trajet de communication vers chaque serveur d'une pluralité de serveurs (10a, 10b, 10c) ;
une deuxième étape dans laquelle le dispositif de passerelle (20) reçoit des premières informations de dispositif qui correspondent à un premier élément d'information transmis à partir d'un dispositif (30) ;
une troisième étape dans laquelle le dispositif de passerelle (20) convertit au moins une partie des premières informations de dispositif en des secondes informations de dispositif qui correspondent à un second élément d'information dans un format déterminé en fonction des serveurs (10a, 10b, 10c) agissant en qualité de destination de transfert ;
une quatrième étape dans laquelle le dispositif de passerelle (20) détermine, pour chacun des serveurs (10a, 10b, 10c), si les secondes informations de dispositif peuvent ou non être transférées au serveur, sur la base de l'état de paramètre de sécurité du trajet de communication vers le serveur ; et
une cinquième étape dans laquelle le dispositif de passerelle (20) transmet les secondes informations de dispositif au serveur, qui est déterminé comme étant en mesure de recevoir les secondes informations de dispositif, à la quatrième étape, ledit procédé de transfert étant **caractérisé par** un niveau de secret qui est prédéfini pour chacune des informations de dispositif dans le format, afin de déterminer si les données doivent être transférées ou non, conformément au niveau de secret.
